# EUROPEAN PATENT SPECIFICATION

(11) **EP 3 623 324 B1**
(45) Date of publication and mention of the grant of the patent: **06.09.2023**
(21) Application number: 19159667.5
(22) Date of filing: 27.02.2019
(51) Int. Cl.: B65G 47/90, B25J 15/00, B25J 15/06, B25J 15/08, B65G 47/91, B65G 59/00, B65G 61/00, B25J 9/16, B25J 15/10, G05B 19/418

(54) **CONVEYANCE APPARATUS, CONVEYANCE SYSTEM AND CONVEYANCE METHOD**
FÖRDERVORRICHTUNG, FÖRDERSYSTEM UND FÖRDERVERFAHREN
APPAREIL DE TRANSPORT, SYSTÈME DE TRANSPORT ET PROCÉDÉ DE TRANSPORT

(30) Priority: 11.09.2018 JP 2018169587
(43) Date of publication of application: 18.03.2020
(73) Proprietor: Kabushiki Kaisha Toshiba, Tokyo 105-0023 (JP); Toshiba Infrastructure Systems & Solutions Corporation, Kawasaki-shi, Kanagawa 212-0013 (JP)
(72) Inventor: Nakamoto, Hideichi, Tokyo, 105-0023 (JP); Sugahara, Atsushi, Tokyo, 105-0023 (JP)
(74) Representative: Hoffmann Eitle

(56) References cited:
- WO-A1-2015/132720
- WO-A1-2017/181337
- US-A1- 2007 280 812
- US-A1- 2015 314 972
- US-A1- 2017 137 236
- US-A1- 2018 079 082
- AYDIN K K ED - DE SARIO M ET AL: "FUZZY REPRESENTATION OF GRASPING MODES", MELECON '96. 8TH. MEDITERRANEAN ELECTROTECHNICAL CONFERENCE. INDUSTRIAL APPLICATIONS IN POWER SYSTEMS, COMPUTER SCIENCE AND TELECOMMUNICATIONS. BARI, IT., MAY 13 - 16, 1996; [MELECON. MEDITERRANEAN ELECTROTECHNICAL CONFERENCE], NEW YORK, IEEE, US, vol. CONF. 8, 13 May 1996 (1996-05-13), pages 182-185, XP000696226, DOI: 10.1109/MELCON.1996.550987 ISBN: 978-0-7803-3110-5

## Description

### FIELD

The present disclosure relate to a conveyance apparatus, a conveyance system and a conveyance method for unloading a package placed on a placement portion of a pallet or the like. The invention relates to a conveyance apparatus according to claim 1, a conveyance system according to claim 19 and a conveyance method according to claim 20.

### BACKGROUND

In a conveyance apparatus that performs unloading in a logistics center or the like, each package is suctioned and grasped one by one by using, for example, a suction mechanism. Then, these packages are placed on a conveyor or the like, the suction is released, and the packages are conveyed to desired positions.

In a case where the suction mechanism is used for the conveyance apparatus that performs unloading, it takes time to operate a pump to suction to the package and to release the suctioned package at the desired position. Thus, it is considered difficult to further speed up the unloading work by only using the suction mechanism.

The packages include not only rectangular parallelepiped boxes but also ones with various shapes, such as cylindrical ones, envelopes folded as appropriate, and paper carrier bags. Moreover, depending on the exterior treatment of the packages, there are packages that cannot be grasped by the suction mechanism.

US 2007/280812 A1 relates to a material handling tool comprising a longitudinal body provided with a proximate end und a distal end. The handling tool includes a vacuum jaw assembly so mounted to the distal end of the body as to be transversally movable, and a longitudinally movable jaw assembly so mounted to the longitudinal body as to be longitudinally movable between a retracted position where the movable jaw assembly is adjacent to the longitudinal body and an extended position where the movable jaw assembly faces the vacuum jaw assembly. In particular US 2007/280812 A1 discloses a conveyance apparatus comprising:a camera that is configured to acquire image information on one or more packages stacked on a placement portion;a grip that is configured to grasp at least one of the one or more packages;an arm that is configured to move the grip toward the one or more packages imaged by the camera and is configured to retract the grip from the placement portion in a state where the one or more packages are grasped by the grip; and a processor that is configured to:- control the conveyance apparatus according to several configurations of grasping modes being frictional grasping, suction grasping and back face grasping, the frictional grasping being for frictionally grasping the one or more packages by the grip , the suction grasping being for grasping the one or more packages by suction with the grip,- move the arm and the grip based on the data provide to the controller, and take out the one or more packages from the placement portion by moving the arm and the grip while at least one of the one or more packages is grasped by the grip.

AYDIN K K ED - DE SARIO M ET AL: "FUZZY REPRESENTATION OF GRASPING MODES", MELECON '96. 8TH. MEDITERRANEAN ELECTROTECHNICAL CONFERENCE. INDUSTRIAL APPLICATIONS IN POWER SYSTEMS, COMPUTER SCIENCE AND TELECOMMUNICATIONS. BARI, IT., MAY 13 - 16, 1996, NEW YORK, IEEE, US, vol. CONF. 8, pages 182-185 relates to a fuzzy representation of grasping modes of a grasping action performed by a robot hand, allow to investigate the relations of object and task features with the grasping modes.

### BRIEF DESCRIPTION OF THE DRAWINGS

FIG. 1 is a schematic view showing an unloading system that takes out packages from a placement portion (cargo wagon) according to a first example;
FIG. 2 is a schematic block diagram of the conveyance apparatus of the unloading system shown in FIG. 1;
FIG. 3A is a schematic perspective view showing an example of the grip used in the conveyance apparatus and showing a state where the grip is in an initial shape for grasping the upper face of a certain package;
FIG. 3B is a schematic perspective view showing a state (a third deformation state) where the grip shown in FIG. 3A is deformed, the second grip at the base end side of the first grip (the upper face grip) is a front face grip that grasps the front face of a certain package, and the third grip at the tip side of the first grip is a back face grip that grasps the back face of the certain package;
FIG. 4A is a schematic view showing a state where, while the grip of the conveyance apparatus of the system shown in FIG. 1 performs the upper face grasping to grasp the upper face of a certain package, that package is supported by the lower support from the lower side;
FIG. 4B is a schematic view showing a state where, while the grip of the conveyance apparatus of the system shown in FIG. 1 performs the front face grasping to grasp the front face of a certain package, that package is supported by the lower support from the lower side;
FIG. 4C is a schematic view showing a state where, while the grip of the conveyance apparatus of the system shown in FIG. 1 performs the back face grasping to grasp the back face of a certain package, that package is supported by the lower support from the lower side;
FIG. 5 is a schematic view showing a state where, while the grip of the conveyance apparatus of the system shown in FIG. 1 performs the two-face grasping to grasp the upper face and the front face of a certain package, that package is supported by the lower support from the lower side;
FIG. 6A is a schematic view showing a state where the grip of the conveyance apparatus of the system shown in FIG. 1 is moved in the X-axis direction along the upper face of a certain package to search for the presence of absence of a gap between the certain package and a package on the back face side thereof;
FIG. 6B is a schematic view showing a state where the grip of the conveyance apparatus shown in FIG. 6A inserts the back face grip into the gap between the back face of the certain package and the front face of the package on the back face side of that package;
FIG. 7A is a schematic view showing an example of the back face grip provided at the tip of the grip of the conveyance apparatus shown in FIG. 6A and showing a state (an initial shape or a first deformation state) where the function as the back face grip is not exerted;
FIG. 7B is a schematic view showing a state (a second deformation state or a third deformation state) of being deformed with respect to the state shown in FIG. 7A so as to exert the function of the back face grip shown in FIG. 7A;
FIG. 8A is a schematic view showing another example of the back face grip provided at the tip of the grip of the conveyance apparatus shown in FIG. 6A and showing a state (an initial shape or a first deformation state) where the function of the back face grip is not exerted;
FIG. 8B is a schematic view showing a state (a second deformation state or a third deformation state) of being deformed so as to exert the function of the back face grip shown in FIG. 8A;
FIG. 9A is a schematic view showing a state where the grip grasps the upper face and the front face of a certain package to form a gap between the back face of that certain package and the front face (which may be a wall) of a package on the back face side of that package;
FIG. 9B is a schematic view showing a state where the back face grip is inserted into the gap, which is formed by the grip shown in FIG. 9A, between the back face of the certain package and the front face of the package on the back face side of that package;
FIG. 10A is a flowchart used in primary determination of a grasping mode (frictional grasping/suction grasping/back face grasping) for a certain package by the system shown in FIG. 1;
FIG. 10B is a flowchart showing a flow subsequent to FIG. 10A, which is used in more detailed determination of a grasping mode after the primary determination of the grasping mode with the flow shown in FIG. 10A;
FIG. 10C is a flowchart showing a flow subsequent to FIG. 10A and/or FIG. 10B;
FIG. 11 is a schematic block diagram of an unloading system according to a first modification example of the first example;
FIG. 12 is a schematic block diagram of an unloading system according to a second modification example of the first example;
FIG. 13 is a schematic view showing a state where a plurality of packages are to be simultaneously pulled out and placed on one lower support by using a back face grip in a conveyance apparatus of an unloading system according a second example;
FIG. 14 is a schematic view showing a state where a plurality of packages of which the positions of the front faces are shifted in the X-axis direction, are to be simultaneously pulled out and placed on lower support plates, which support the respective packages from the lower side, by using a back face grip in a conveyance apparatus of an unloading system according to a first modification example of the second example;
FIG. 15 is a schematic view showing a state where a plurality of packages, of which the positions of the back faces are shifted in the X-axis direction, are to be simultaneously pulled out and placed on a lower support by using a back face grip in a conveyance apparatus of an unloading system according to a second modification example of the second example; and
FIG. 16 is a schematic view showing a state where a plurality of packages, of which the positions of the front faces and the back faces are shifted in the X-axis direction and the positions of the front faces are shifted in the Z-axis direction, are to be simultaneously pulled out and placed on lower support plates, which support the respective packages from the lower side, by using the back face grip shown in FIG. 15.

### DETAILED DESCRIPTION

The invention is defined by the independent claims, preferred embodiments are defined by the dependent claims. Further aspects are provided for facilitating the understanding of the invention.

Hereinafter, examples will be described with reference to the drawings.

### (FIRST EXAMPLE)

An objective according to the first example is to provide a conveyance apparatus, a conveyance system and a conveyance method, which can automatically determine a grasping method of one or more packages and execute grasping.

According to the first example, a conveyance apparatus includes a camera, a grip, an arm, a database, and a processor. The camera is configured to acquire image information on one or more packages stacked on a placement portion. The grip is configured to grasp at least one of the one or more packages. The arm is configured to move the grip toward the one or more packages imaged by the camera and is configured to retract the grip from the placement portion in a state where the one or more packages are grasped by the grip. The database in which information on the one or more packages is stored. The processor is configured to determine which (one of) grasping mode of frictional grasping, suction grasping and back face grasping should be selected from the image information photographed by the camera and the information in the database. The processor is configured to move the arm and the grip based on the determination, and take out the one or more packages from the placement portion by moving the arm and the grip while at least one of the one or more packages is grasped by the grip. The frictional grasping is for frictionally grasping the one or more packages by the grip. The suction grasping is for grasping the one or more packages by suction with the grip. The back face grasping is for grasping a back face of the one or more packages by the grip.

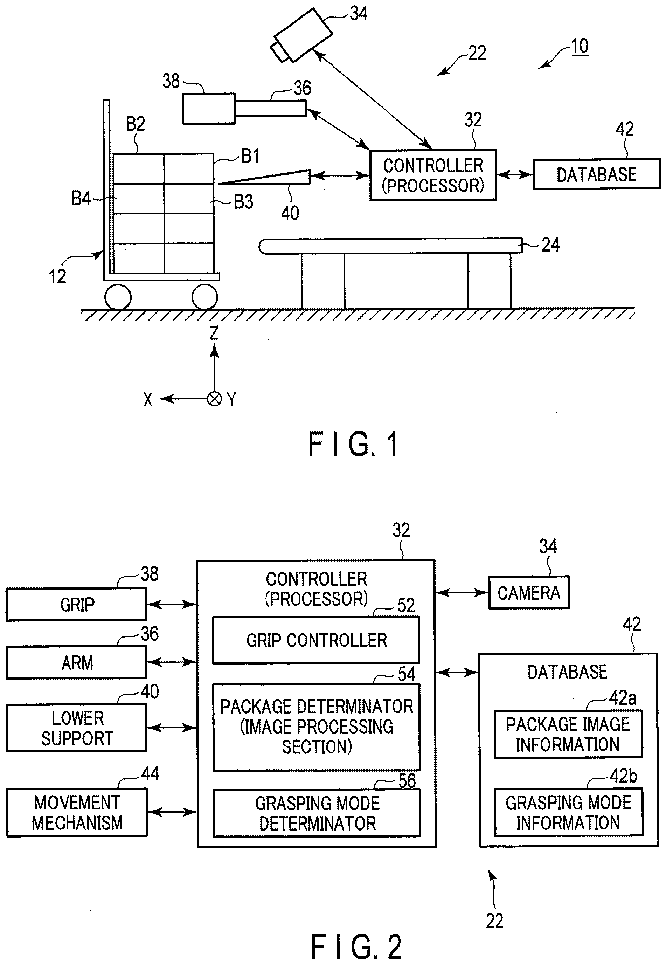

FIG. 1 is a view showing the basic constitution of an unloading system (a conveyance system) 10 that takes out packages B1, B2, B3 and so on from a placement portion (a package carrying platform) 12. Particularly in the first example, an example will be described in which the packages B1, B2, B3 and so on are removed one by one from the placement portion 12.

The placement portion 12 is a place where the packages are loaded or placed. The placement portion 12 may be a shelf, a cargo wagon, a steel wagon, a box pallet, a pallet, or the like. The placement portion 12 can suitably move. A description will be given of a case where a wagon having bars in three directions, called a cargo wagon, is mainly used as the placement portion 12 herein. In this case, one or more packages are taken in and out from the face without bars. The shape of the placement portion 12 may be any shape described above as appropriate.

The unloading system 10 according to the present example has a conveyance apparatus 22 that takes out the packages from the placement portion 12, and a conveyor 24 that conveys the removed packages to desired positions.

The conveyance apparatus 22 has a controller (a processor) 32 as a control circuit, a camera 34, an arm 36, a grip 38, a lower support 40 and a database 42. The grip 38 that grasps a package(s) is provided at the tip of the arm 36.

Note that, in a case of handling packages that are considered to be light, for example, a sealed letter with a predetermined size and the like, there may be a case where the lower support 40 is not used. Thus, in a case where the conveyance apparatus 22 handles only relatively light packages, the conveyance apparatus 22 does not need to have the lower support 40. The same applies to not only the present example but also a conveyance apparatus 22 (a system 10) of another example including modification examples. Herein, the conveyance apparatus 22 (the system 10) that handles light packages to relatively heavy packages will be described.

The grip 38 can grasp at least one of one or more packages. The arm 36 can move the grip 38 toward the package B1 imaged by the camera 34 and retract the grip 38 from the placement portion 12 in a state where the package B1 is grasped by the grip 38. The lower support 40 can take out the package B1 from the placement portion 12 while supporting the package B1, which is moved by the grip 38, from the lower side.

The controller 32 is a computer including, for example, a processor such as a CPU, and storage apparatuses such as a ROM, a RAM, a memory, an auxiliary storage and a hard disk drive. A program is installed in advance in the controller 32. The controller 32 can control the camera 34, the arm 36, the grip 38 and the lower support 40 as automated devices by the program.

Note that the controller 32 is realized by executing, with the processor such as a CPU, the program stored in the memory, but is not limited thereto. Part of or the entire controller 32 may be realized by hardware such as an LSI, an ASIC or an FPGA.

In the present example, the camera 34, the arm 36, the grip 38 and the lower support 40 are connected to the controller 32 and controlled by the controller 32. Thus, the controller 32 transmits and receives signals to and from the camera 34, the arm 36, the grip 38 and the lower support 40 and controls the operations of the camera 34, the arm 36, the grip 38 and the lower support 40. Note that the arm 36, the grip 38 and the lower support 40 are controlled by the controller 32, for example, with feedback control or the like, and are made close to a desired position as much as possible.

Herein, an XYZ orthogonal coordinate system is adopted as shown in FIG. 1. As shown in FIG. 2, the conveyance apparatus 22 has a movement mechanism 44 that moves the arm 36 (the grip 38) and the lower support 40 to each of an X-axis, a Y-axis and a Z-axis. Thus, the arm 36, the grip 38 and the lower support 40 are moved in the X-axis direction, the Y-axis direction and the Z-axis direction. The movement mechanism 44 may have a structure in which the arm 36 and the lower support 40 are rotationally moved about an axis of an axis (not shown) parallel to the Z-axis.

Then, by moving the arm 36, the grip 38 can be moved to any position. Thus, a certain package B1 selected by the controller 32 can be removed, by the grip 38, from among the one or more packages stacked in the placement portion 12.

Moreover, the lower support 40 that supports the package B1, which has been removed by the grip 38, from the lower side can also be moved to any position.

Herein, a positive X-axis direction is the direction in which the grip 38 is made close to the placement portion 12, and a negative X-axis direction is the direction in which the grip 38 is made away from the placement portion 12. A positive Y-axis direction is the direction from the left direction to the right direction in the image captured by the camera 34, and a negative Y-axis direction is the direction from the right direction to the left direction in the image captured by the camera 34. A positive Z-axis direction is the direction from the lower side to the upper side in the vertical direction, and a negative Z-axis direction is the direction from the upper side to the lower side in the vertical direction.

Note that the lower support 40 is disposed in the negative Z-axis direction of the grip 38 and/or the arm 36.

The movement mechanism 44 is also connected to the controller 32 and controlled by the controller 32 in the same manner as the arm 36 and the grip 38.

The controller 32 has a grip controller 52 that controls the arm 36, the grip 38 and the movement mechanism 44 as appropriate. The control of the arm 36, the grip 38 and the movement mechanism 44 by the grip controller 52 is performed by the controller (the processor) 32.

In a case where the arm 36, the grip 38 and the lower support 40 can be moved without the movement mechanism 44, the movement mechanism 44 may be unnecessary. That is, in a case where the arm 36, the grip 38 and the lower support 40 can be three-dimensionally moved as appropriate, the movement mechanism 44 may be unnecessary.

In addition to the grip controller 52, the controller 32 has a package determinator (package signal output section) 54 and a grasping mode determinator (grasping mode output section) 56 described later. In addition to the grip controller 52, the package determinator 54 and the grasping mode determinator 56, the controller 32 can execute various functions such as writing data into the database 42 and reading data from the database 42. Thus, the database 42 is also connected to the controller 32, and the controller 32 can read out/writing various data from and into the database 42.

In the database 42, as an example, image information (package image information) 42a on a predetermined package and grasping mode information 42b corresponding to that predetermined package image information 42a on a one-to-one basis are stored. Thus, in the database 42, information on the one or more packages can be stored. As for the predetermined package image information 42a, for example, not only the ratio of the length, width and height of the box but also the numerical values of the length, width and height estimated from the package image information 42a obtained from the camera 34 are suitably stored as information in the database 42.

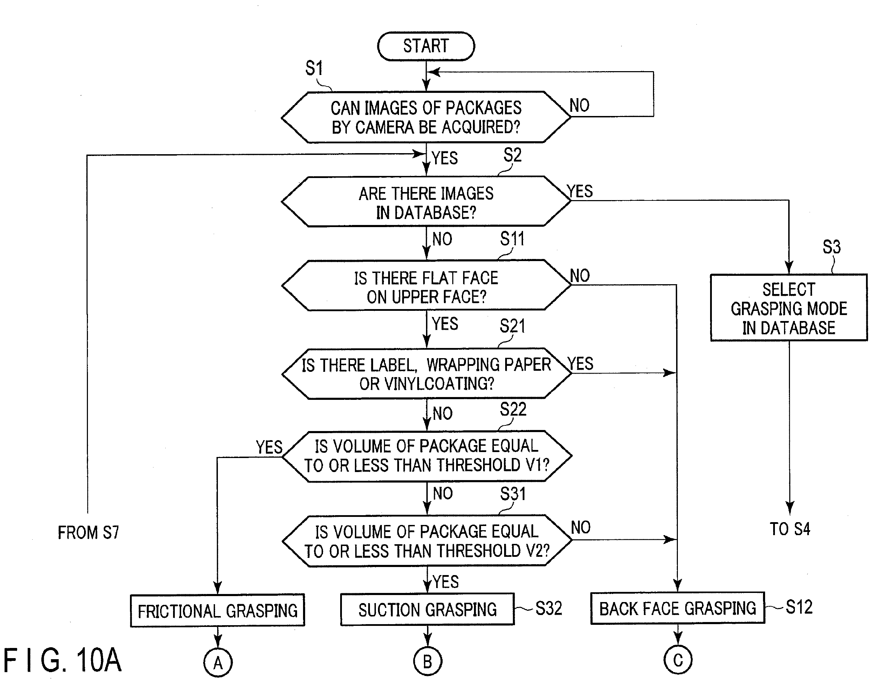

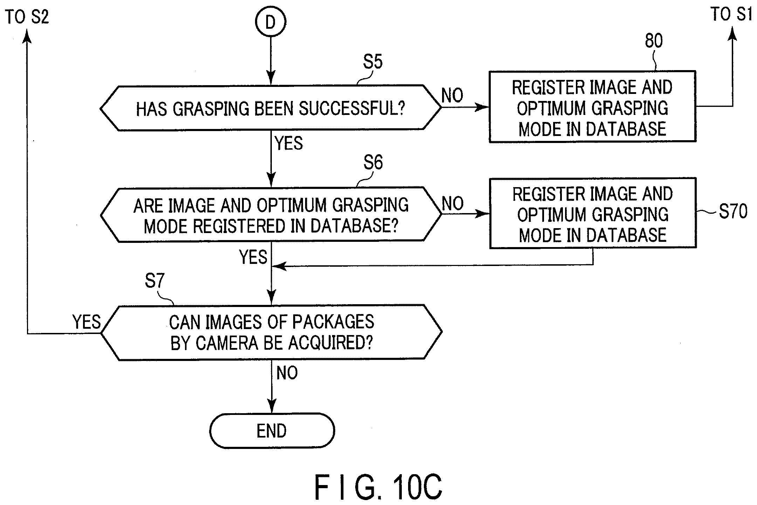

By using the unloading system 10, along the flows (see FIGS. 10A to 10C) described later, the package image information 42a on the package successfully grasped and the grasping mode information 42b corresponding to the package image information 42a on the package successfully grasped are sequentially stored in the database 42. The controller 32 grasps a package with the grip 38 and the lower support 40 in accordance with the flows described later and places that package on the conveyor 24.

Note that, in the database 42, in addition to the package image information 42a and the grasping mode information 42b, various kinds of information related to the conveyance apparatus 22 can be stored.

The camera 34 is disposed at a position where the packages B1, B2, B3 and so on placed on the placement portion 12 can be observed. The number of cameras 34 may be one or plural. In a case where the number of cameras 34 is one, as shown in FIG. 1, the camera 34 is disposed at a position where the front faces and/or the upper faces of the packages B1, B2 and B3 can be imaged.

Note that the upper face of the package B1 is a plane that intersects with that package B1 when heading toward the negative Z-axis direction from a certain position, the front face is a plane that intersects with that package B1 when heading toward the positive X-axis direction from a certain position, and the back face is a plane that intersects with that package B1 when heading toward the negative X-direction from a certain position. The lower face of the package B1 is a plane that intersects with that package B1 when heading toward the positive Z-axis direction from a certain position.

In a case where the number of cameras 34 is plural, as an example, one camera 34 is disposed at a position facing the upper face of the package B1, and the other camera 34 is disposed at a position facing the front faces of the packages B1 and B3. Then, the package image information 42a captured by the cameras 34 is synthesized as appropriate to grasp the edges of each of the packages B1, B2, B3 and so on, and the order of the packages removed from the placement portion 12 is decided. The package image information 42a captured by the cameras 34 also includes information on the sizes of the packages B1, B2, B3 and so on.

The controller 32 has the package determinator 54 that determines the presence of the packages B1, B2, B3 and so on based on the image information captured by the camera 34. The package determinator 54 performs image processing on the image information captured by the camera 34 to recognize the number, positions, shapes, sizes and the like of the packages B1, B2, B3 and so on present in the image information. Thus, the controller 32 can determine that the plurality of packages B1 and B2 are in close contact with each other based on the image information captured by the camera 34. Note that when the controller (processor) 32 determines something, the controller (processor) 32 outputs an appropriate signal. That is, determining something by the controller (processor) 32 involves the controller (processor) 32 outputting the appropriate signal.

Herein, the package determinator 54 has determined that the package B1 is grasped and conveyed ahead of the packages B2, B3 and so on. As a technique for determining the package B1 that can be removed from the placement portion 12, a known one can be used as appropriate. Thus, the description thereof is omitted herein. Next, the packages B2, B3 and B4 are grasped and conveyed in this order. Note that the determination of the package determinator 54 is performed by the controller (the processor) 32.

At this time, in particular, the controller 32 can recognize the lower edge of the front face of the package B1 removed from the placement portion 12 by performing image processing on the image captured by the camera 34 with the package determinator 54. As a technique for recognizing the lower edge of the front face of the package B1 removed, a known one can be used as appropriate. Thus, the description thereof is omitted herein. Thus, the controller 32 moves the lower support 40 as appropriate to make it near the lower edge of the front face of the package B1 removed from the placement portion 12. At this time, the controller 32 makes the tip (the position closest to the placement portion 12 in the positive X-axis direction) of the lower support 40 near the lower edge of the front face of the package B1 removed from the placement portion 12 as well as disposes the tip slightly under the lower edge of the front face of the package B1.

After the package B1 in FIG. 1 has been removed, the package determinator 54 of the controller 32 newly determines the removal of the package B2 in the order of the packages B2, B3 and B4 based on new image information captured by the camera 34. Note that, in a case where the positions of the packages B2 and B3 are shifted due to the removal of the package B1 from the placement portion 12 when which one of the packages B2 and B3 is removed is determined, the order of removing the packages may be changed.

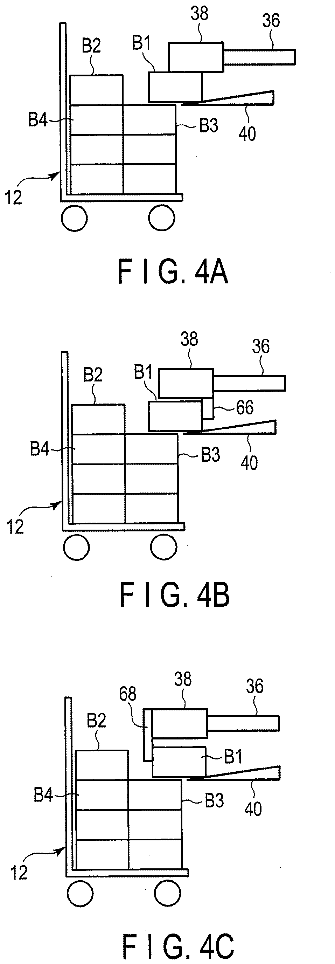

The controller 32 has the grasping mode determinator 56 that determines grasping mode for the removing package B1 determined by the package determinator 54. The grasping modes include, for example, frictional grasping, suction grasping, back face grasping and the like described later using, for example, FIGS. 4A to 9B. Note that the determination of the grasping mode determinator 56 is performed by the controller (the processor) 32.

According to the grasping mode determined by the grasping mode determinator 56, the arm 36, the grip 38 and the lower support 40 are operated. Thus, the control of the grip controller 52 is performed by the controller (the processor) 32.

From the image information on the package photographed by the camera 34 and the information in the database 42, the grasping mode determinator 56 of the controller 32 determines the grasping face of and the grasping mode for the package B1. Then, the grasping mode determinator 56 of the controller 32 instructs the grip controller 52 on the grasping face and the grasping mode.

For ease of explanation, the package B1 will be described as a substantially rectangular parallelepiped box. The package B1 is not limited to a substantially rectangular parallelepiped, such as a folded envelope, and various shapes including a spherical shape are allowed.

There may be a case where the package image information 42a and the grasping mode information 42b corresponding to the package image information 42a are not present in the database 42 even when the package B1 has a box shape. Moreover, in a case where the package B1 has a shape different from a box shape, such as a bag shape, a ski or a golf bag, the outer shape of the package B1 may be changed according to, for example, the packaged state. In this case, it is presumed that there are many cases where the package image information 42a and the grasping mode information 42b corresponding to the package image information 42a are not present in the database 42.

The upper face of the box-shaped package B1 is the upper side face in the vertical direction. In FIG. 1, the upper face of the package B1 is parallel or substantially parallel to the XY plane. The upper face of the package B1 is not limited to a flat face.

The front face of the package B1 is a face of the package B1 placed on the placement portion 12, which faces the lower support 40. In FIG. 1, the front face of the package B1 is parallel or substantially parallel to the YZ plane. The front face of the package B1 is not limited to a flat face.

The back face of the package B1 is a face of the package B1 placed on the placement portion 12, which is opposite to the face facing the lower support 40. That is, the back face of the package B1 is the face opposite to the front face. In FIG. 1, the back face of the package B1 is parallel or substantially parallel to the YZ plane. The back face of the package B1 is not limited to a flat face.

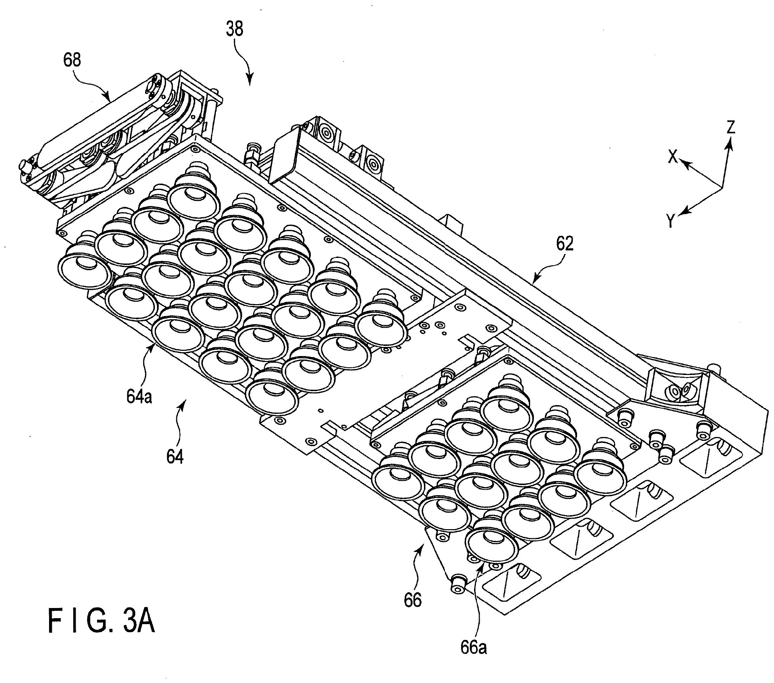

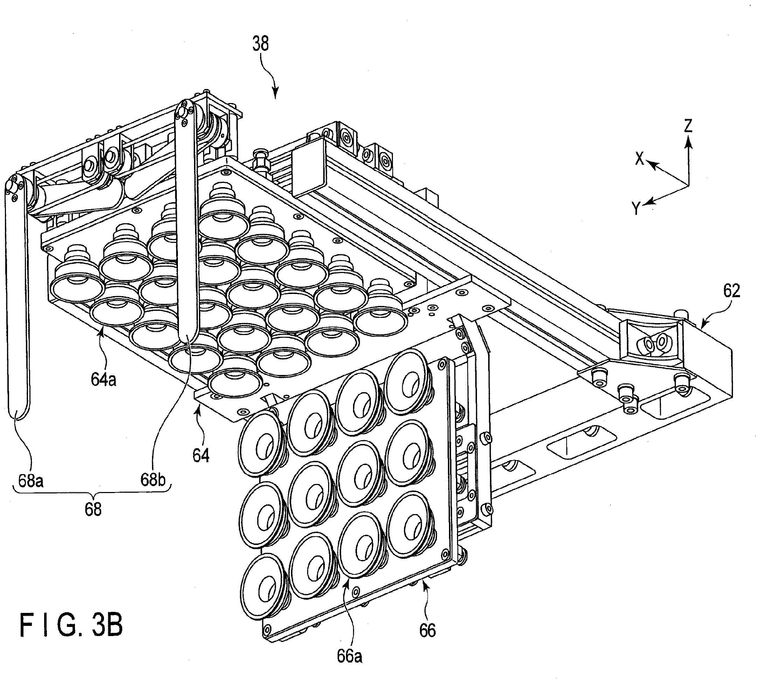

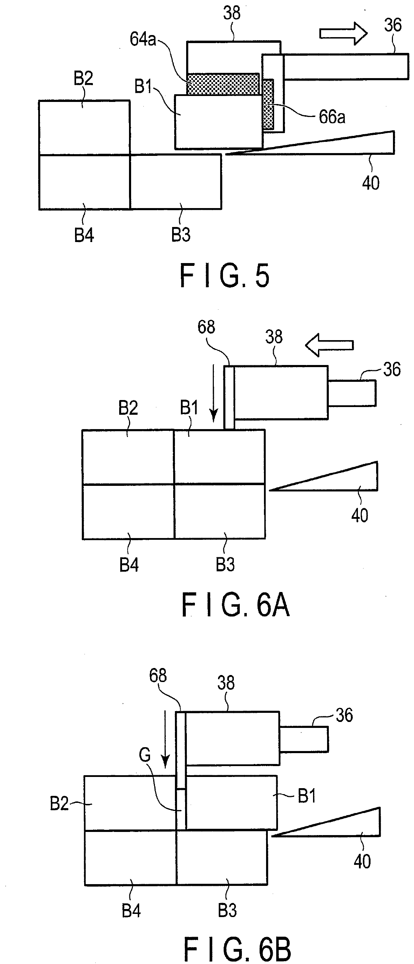

FIGS. 3A and 3B show a constitution example of the grip 38. The grip 38 includes a mechanism that can grasp the upper face alone (see FIGS. 3A and 4A), the front face alone (see FIGS. 3B and 4B), and both the upper face and the front face (see FIGS. 3B and 5) of a certain package B1.

The grip 38 has a base 62, an upper face grip 64 that is provided on the base 62 and grasps the upper face of the package B1, a front face grip 66 that is provided on the base 62 at the front side of the upper face grip 64 in the X-axis direction (the negative X-axis direction side), is bent by, for example, 90° with respect to the upper face grip 64, and grasps the front face of the package B1, and a back face grip 68 that is provided on the base 62 at the back side of the upper face grip 64 in the X-axis direction (the positive X-axis direction side), is bent by, for example, 90° with respect to the upper face grip 64, and grasps the back face of the package B1. Note that the base 62 is fixed to, for example, the tip of the arm 36.

In a case where the grip 38 is in the shape (an initial shape) shown in FIG. 3A, the front face grip 66 as well as the upper face grip 64 can grasp the upper face of the package B1 together.

The front face grip 66 is rotationally moved about the axis of the Y-axis orthogonal to the X-axis by, for example, a motor (not shown) or the like and is bent by, for example, 90° with respect to the upper face grip 64. When the front face grip 66 is bent by 90° with respect to the upper face grip 64, the position of the front face grip 66 with respect to the upper face grip 64 is at a position in the negative Z-axis direction. Then, the back face grip 68 maintains the state shown in FIG. 3A. This is a first deformation state of the grip 38. A driving state of the motor or the like that moves the front face grip 66 with respect to the upper face grip 64 is controlled by the grip controller 52 based on the determination by the grasping mode determinator 56 of the controller 32. That is, the deformation of the front face grip 66 with respect to the upper face grip 64 of the grip 38 is controlled by the controller 32. In this manner, it is unnecessary to select an appropriate grip from a plurality of lineups in the conveyance apparatus 22 according to the present example even in a case where two-face frictional grasping, front face suction grasping or two-face suction grasping is performed.

The back face grip 68 has claws 68a and 68b that are rotationally moved about the axis of the X-axis by, for example, 90° with, for example, a motor (not shown) or the like and bent by, for example, 90° with respect to the upper face grip 64. Thus, the claws 68a and 68b are provided at the tip portion of the grip 38. The claws 68a and 68b of the back face grip 68 can support the back face of the one or more packages B1, B2 and so on and are used to put the packages B1, B2 and so on, on the lower support 40 while the one or more packages B1, B2 and so on are taken out from the placement portion 12 in a state where the back faces are supported. When the claws 68a and 68b of the back face grip 68 are bent by 90° with respect to the upper face grip 64, the positions of the claws 68a and 68b of the back face grip 68 with respect to the upper face grip 64 are at positions in the negative Z-axis direction. Then, the front face grip 66 maintains the state shown in FIG. 3A. This is a second deformation state of the grip 38. A driving state of the motor or the like that moves the claws 68a and 68b of the back face grip 68 with respect to the upper face grip 64 is controlled by the grip controller 52 based on the determination by the grasping mode determinator 56 of the controller 32. That is, the deformation of the back face grip 68 with respect to the upper face grip 64 of the grip 38 is controlled by the controller 32. In this manner, it is unnecessary to select an appropriate grip from a plurality of lineups in the conveyance apparatus 22 according to the present example even in a case where back face grasping is performed.

FIG. 3B shows a state where the front face grip 66 is rotationally moved by 90° with respect to the upper face grip 64 and the back face grip 68 is rotationally moved by 90° with respect to the upper face grip 64. This is a third deformation state of the grip 38. Even in a case where the grip 38 is in the third deformation state, the packages B1, B2, B3 and so on can be grasped as appropriate.

On the upper face grip 64 and the front face grip 66 shown in FIGS. 3A and 3B, a large number of friction/suction grasping members 64a and 66a, which are aligned as appropriate, are arranged, respectively. When the friction/suction grasping members 64a and 66a are moved, for example, in parallel to contact faces in a state of being in contact with the contact faces of the packages B1, B2 and so on, friction is generated between the friction/suction grasping members 64a and 66a and the contact faces of the packages B1, B2 and so on.

The friction/suction grasping members 64a and 66a can be used to stick fast to the packages B1, B2 and so on. The friction/suction grasping members 64a and 66a are formed as, for example, substantially conical suction pads by rubber with a large friction coefficient, or the like. The friction/suction grasping members 64a and 66a are connected to a pump (not shown). For example, in a vacuum suction system, by using the pump (not shown) to discharge the air at the contact sites between the package B1 and the friction/suction grasping members 64a, the package B1 is held by the differential pressure with the atmospheric pressure. Thus, it is unnecessary to select the grip 38 in the conveyance apparatus 22 according to the present example in a case where frictional grasping is performed and in a case where suction grasping is performed.

As shown in FIG. 3A, the grip 38 is normally maintained in a shape (the initial shape) as thin as possible in the Z-axis direction. In order to shorten the time for performing processing of conveying all the packages B1, B2 and so on from one placement portion 12, the grip 38 suitably performs upper face grasping mainly. Since the grip 38 has a relatively thin shape, the grip 38 can be easily inserted into a gap under a shelf of the placement portion 12, or the like.

In a case of performing front face grasping, two-face grasping of the upper face and the front face, and back face grasping or the like for the package B1, the grip 38 is deformed from the initial shape shown in FIG. 3A to the first deformation state or the second deformation state. Moreover, depending on the grasping mode, the grip 38 may be deformed from the initial shape shown in FIG. 3A to the third deformation state shown in FIG. 3B.

That is, in a case where the grip 38 is deformed from the initial shape shown in FIG. 3A to the first deformation state, the front face grip 66 is folded with respect to the upper face grip 64 such that part (front side portions) of the friction/suction grasping members 66a is brought into face contact with the front face of the package B1. Thus, the grip 38 can perform the front face grasping and the two-face grasping of the upper face and the front face.

In a case where the grip 38 is deformed from the initial shape shown in FIG. 3A to the second deformation state, the back face grip 68 is deformed with respect to the upper face grip 64 such that part (a back side portion) of the back face grip 68 is brought into contact with the back face of the package B1. Thus, the grip 38 can perform the back face grasping and two-face grasping of the back face and the upper face. Moreover, herein, the back face grip 68 at the tip of the grip 38 has the claws 68a and 68b. By rotating both the claws 68a and 68b of the back face grip 68 with respect to the base 62 so as to be in a state of being extended in the negative Z-axis direction, the back face grasping for a certain package B1 can be performed. At this time, depending on the packages, the grip 38 can perform not only the back face grasping but also the two-face grasping of the back face and the upper face.

FIGS. 4A to 4C show grasping modes of the grip 38 according to the present example for the package B1. FIG. 4A shows the upper face grasping for grasping the upper face of the package B1 by the grip 38 as a first grasping mode. FIG. 4B shows the front face grasping for grasping the front face of the package B1 by the grip 38 as a second grasping mode. FIG. 4C shows the back face grasping for grasping the back face of the package B1 by the grip 38 as a third grasping mode.

Herein, for example, when the package B1 is to be grasped, the image information captured by the camera 34 includes not only the package B1 desired to be grasped but also the package B2 on the back face side of that package B1, the package B3 under that package B1, and the like. Thus, when the package B1 is to be grasped by the grip 38, the lower support 40 and/or the movement mechanism 44 can make the tip of the lower support 40 near or abut the package B3 under the package B1 to be grasped. Thus, the package B3 under the package B1 desired to be grasped is prevented, by the tip of the lower support 40, from moving along the negative X-axis.

There are two modes, upper face frictional grasping and upper face suction grasping, for the upper face grasping shown in FIG. 4A. In a case of performing the upper face frictional grasping, the controller 32 places the grip 38 on the upper face of the package B1. At this time, the friction/suction grasping members 64a are brought into contact with the upper face of the package B1. When the controller 32 draws the grip 38 in the negative X-axis direction in this state, that package B1 is drawn in the negative X-axis direction with respect to the package B3 under the package B1. Since the frictional force is generated between the grip 38 and the upper face of the package B1, the package B1 is taken out from the placement portion 12 in the negative X-axis direction and put on the lower support 40.

Note that the lower support 40 is suitably not moved when the arm 36 and the grip 38 are being moved in the negative X-axis direction. Thus, the package B1 is securely put on the lower support 40.

In a case of performing the upper face suction grasping, the controller 32 places the grip 38 on the upper face of the package B1. At this time, the friction/suction grasping members 64a are brought into contact with the upper face of the package B1. Then, the controller 32 causes the pump (not shown) to operate to create vacuum states between the friction/suction grasping members (the suction pads) 64a and the upper face of the package B1 so that the friction/suction grasping members 64a stick fast to the upper face of the package B1. When the controller 32 draws the grip 38 in the negative X-axis direction in this state, that package B1 is drawn in the negative X-axis direction with respect to the package B3 under the package B1. The package B1 is taken out from the placement portion 12 in the negative X-axis direction and disposed slightly spaced apart from the upper side of the lower support 40 or put on the lower support 40.

In a case where the upper face grasping for grasping the upper face of the package Bl by the grip 38 is performed as described above, the frictional grasping and the suction grasping are available as options. The frictional grasping can be performed faster than the suction grasping. Thus, the frictional grasping is a first option for the upper face grasping.

In a case of performing the front face grasping shown in FIG. 4B, the front face suction grasping is mainly performed.

In a case of performing the front face suction grasping, the controller 32 makes the grip 38 near or abut the front face of the package B1. At this time, the controller 32 folds the front face grip 66 by 90° with respect to the upper face grip 64. At this time, the friction/suction grasping members 66a are brought into contact with the upper face of the package B1. Then, the controller 32 causes the pump (not shown) to operate to create vacuum states between the friction/suction grasping members (the suction pads) 66a of the front face grip 66 and the upper face of the package B1 so that the friction/suction grasping members 66a stick fast to the upper face of the package B1. When the controller 32 draws the grip 38 in the negative X-axis direction in this state, that package B1 is drawn in the X-axis direction with respect to the package B3 under the package B1. The package B1 is taken out from the placement portion 12 and disposed slightly spaced apart from the upper side of the lower support 40 or put on the lower support 40.

Note that the friction/suction grasping members 66a are brought into contact with the front face of the package B1 in a case where the front face frictional grasping is to be performed by merely making the grip 38 in contact with the front face of the package B1. However, it is easily imagined that it is difficult to draw that package B1 in the negative X-axis direction with respect to the package B3 under the package B1 and put the package B1 on the lower support 40. Thus, in a case of performing the front face frictional grasping, for example, it is performed in combination with the upper face frictional grasping by using the friction/suction grasping members 64a.

In a case of performing the back face grasping shown in FIG. 4C, the controller 32 disposes the grip 38 above the upper face of the package B1. At this time, the controller 32 folds the claws 68a and 68b of the back face grip 68 by 90° with respect to the upper face grip 64. In particular, the controller 32 disposes the claws 68a and 68b of the back face grip 68 of the grip 38 at positions slightly more backward along the X-axis than the back face of that package B1. Thus, the claws 68a and 68b of the back face grip 68 are disposed between the back face of the package B1 and the front face of the package B2. When the controller 32 draws the grip 38 in the negative X-axis direction in this state, that package B1 is drawn in the negative X-axis direction with respect to the package B3 under the package B1. The package B1 is taken out from the placement portion 12 in the negative X-axis direction and put on the lower support 40.

FIG. 5 shows a state where two-face grasping combining the upper face grasping and the front face grasping is being performed for a certain package B1. For example, there are two-face frictional grasping and two-face suction grasping for the two-face grasping. In a case of performing the two-face frictional grasping, the upper face frictional grasping described using FIG. 4A and the front face frictional grasping described using FIG. 4B are combined. In this case, the front face grip 66 of the grip 38 is bent with respect to the upper face grip 64. Then, when the controller 32 draws the grip 38 in the negative X-axis direction in a state where the frictional force is generated between the grip 38 and the upper face of the package B1 while the front face of that package B1 is supported by the friction/suction grasping members 66a, that package B1 is drawn in the negative X-axis direction with respect to the package B3 under the package B1. Thus, the package B1 is taken out from the placement portion 12 in the negative X-axis direction and put on the lower support 40.

In a case of performing the two-face suction grasping, the upper face suction grasping described using FIG. 4A and the front face suction grasping described using FIG. 4B are combined. In this case, the front face grip 66 of the grip 38 is bent with respect to the upper face grip 64. Then, the controller 32 causes the pump to operate to create vacuum states between the friction/suction grasping members 64a and the upper face of the package B1 and between the friction/suction grasping members 66a and the front face of the package B1 so that the friction/suction grasping members 64a stick fast to the upper face of the package B1 and the friction/suction grasping members 66a stick fast to the front face of the package B1. When the controller 32 draws the grip 38 in the negative X-axis direction in this state, that package B1 is drawn in the negative X-axis direction with respect to the package B3 under the package B1. Thus, the package B1 is taken out from the placement portion 12 in the negative X-axis direction and disposed slightly spaced apart from the upper side of the lower support 40 or put on the lower support 40.

Note that the upper face suction grasping and the front face frictional grasping may be combined. In the present example, the friction/suction grasping members 64a and 66a of the grip 38 are formed so as to simultaneously execute the suction operations in a case of performing suction by the grip 38. Thus, in a case of performing the suction grasping, not only the friction/suction grasping members 64a but also the friction/suction grasping members 66a operate so as to perform the suction grasping. One suction path is formed by the friction/suction grasping members 64a and another suction path is formed by the friction/suction grasping members 66a so that the upper face suction grasping and the front face frictional grasping can be combined.

Moreover, the upper face frictional grasping and the front face suction grasping may be combined. In the present example, the friction/suction grasping members 64a and 66a of the grip 38 simultaneously execute the suction operations in a case of performing the suction grasping by the grip 38. Thus, in the present example, the upper face of the package B1 is subjected to the suction grasping in a case of performing the front face grasping even when the upper face frictional grasping is intended. One suction path is formed by the friction/suction grasping members 64a and another suction path is formed by the friction/suction grasping members 66a so that the upper face frictional grasping and the front face suction grasping can be combined.

Thus, the suction operations of the friction/suction grasping members 64a and 66a of the grip 38 may be individually executed, respectively.

In a case of performing the two-face grasping of the upper face grasping and the front face grasping by the grip 38, a heavier package B1 can be grasped than in a case of performing the upper face grasping alone or the front face grasping alone by the grip 38.

It is possible to combine the grasping modes shown in FIGS. 4A to 4C as appropriate, including the upper face grasping and the front face grasping, the front face grasping and the back face grasping, and the like.

FIG. 6A shows a state where gap search operation is being performed to look for a gap between the back face of the package B1 and the front face of the package B2 by the back face grip 68 under the control of the controller 32. When it has been determined that the packages B1 and B2 are in close contact with each other, the controller 32 can search for the presence or size of a gap G between the packages B1 and B2 by using the back face grip 68 through the upper face of the package B1 to support the back face of the package B1. In particular, FIG. 6A shows a state where the back face grip 68 is moved from the front face side to the back face side along the positive X-axis direction while abutting the upper face of the package B1. At this time, the back face grip 68 lightly presses the upper face of the package B1 downward in the vertical direction (the negative Z-axis direction).

Herein, the controller 32 can determine that the packages B1 and B2 are in close contact with each other based on the image information from the camera 34. Then, even in a case where the packages B1 and B2 are actually in close contact with each other when the controller 32 determines that the packages B1 and B2 are in close contact with each other, there is often a case where a slight gap is formed between the back face of the package B1 and the front face of the package B2. Alternatively, there is often a case where a level difference is formed between the back face of the package B1 and the front face of the package B2. When the back face grip 68 reaches the gap between the packages B1 and B2, the back face grip 68 fits into the gap and vibrates as shown in FIG. 6B. That is, the controller 32 detects the displacement of the back face grip 68 along the Z-axis direction. Moreover, in a case where a level difference is formed between the back face of the package B1 and the front face of the package B2, a package is applied not only to the back face grip 68 but also to other sites including, for example, the base 62 and the like to vibrate. The controller 32 detects this vibration by using the grip 38 as a sensor. At the position where the vibration has been detected, it is presumed that there is a boundary between the packages B1 and B2. The controller 32 detects this vibration, stops the operation of the arm 36, and inserts the back face grip 68 into the boundary (the gap) between the package B1 and the package B2. By performing such gap search operation using the back face grip 68, it is possible to detect the gap between the back face of the package B1 and the front face of the package B2, which is difficult to precisely find in the image information captured by the camera 34, as well as to precisely insert the back face grip 68 into the gap G.

For this back face grip 68, for example, the claws 68a and 68b shown in FIGS. 3A and 3B can be used.

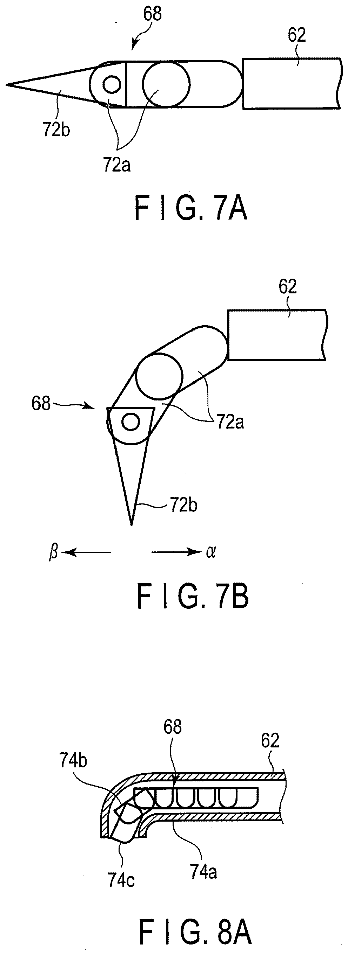

FIGS. 7A and 7B show another example of the back face grip 68 with a claw different from the claws 68a and 68b shown in FIGS. 3A and 3B. Instead of the claws 68a and 68b shown in FIGS. 3A and 3B, a claw 72b, which will be described later and is shown in FIGS. 7A and 7B, can be used.

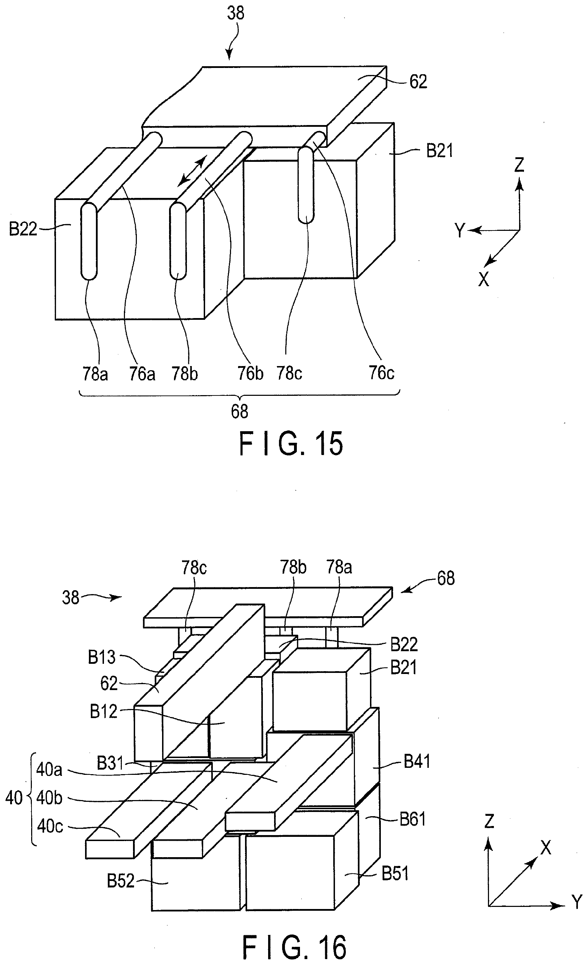

The back face grip 68 shown in FIGS. 7A and 7B has a joint assembly 72a supported by the tip of the base 62 (see FIGS. 3A and 3B) of the grip 38, and the claw 72b. The numbers of the joint assemblies 72a and the claws 72b may be one, two as shown in FIGS. 3A and 3B, or three or more (see FIGS. 15 and 16).

The joint assembly 72a is suitably combined with a plurality of rotary joints. A motor (not shown) is arranged in each rotary joint. The motors of the respective rotary joints are controlled by the grip controller 52 of the controller 32. Thus, the joint assembly 72a and the claw 72b of the back face grip 68 move between an initial shape shown in FIG. 7A and a deformation state shown in FIG. 7B.

Note that, for example, the angle of the claw 72b with respect to the base end of the joint assembly 72a can be set as appropriate. Moreover, the rotatable angle of each joint of the joint assembly 72a is set to an appropriate state.

Since the joint assembly 72a has the rotary joints, the claw 72b can be inserted between the back face of the package B1 and the front face of the package B2 even in a case where the space between the back face of the package B1 and the front face of the package B2 is narrow.

The back face grip 68 having this joint assembly 72a and the claw 72b is used in the same manner as the claws 68a and 68b of the back face grip 68 shown in FIGS. 3A and 3B. Then, the claw 72b can be inserted between the back face of the package B1 and the front face of the package B2 as shown in FIG. 6B while the back face grip 68 is in a state of being deformed into the deformation state shown in FIG. 7B or being deformed. Then, according to the operation of the grip 38, the back face of the package B1 can be pulled out from the placement portion 12 in the negative X-axis direction.

Note that the joint assembly 72a is formed so as to be able to rotationally move in the direction indicated by the reference sign α (the negative X-axis direction), but not to be deformed in the direction indicated by the reference sign β (the positive X-axis direction) in the deformation state shown in FIG. 7B. Thus, in a case where the package B1 is to be removed from the placement portion 12, the claw 72b presses the back face of the package B1 and places that package B1 on the lower support 40.

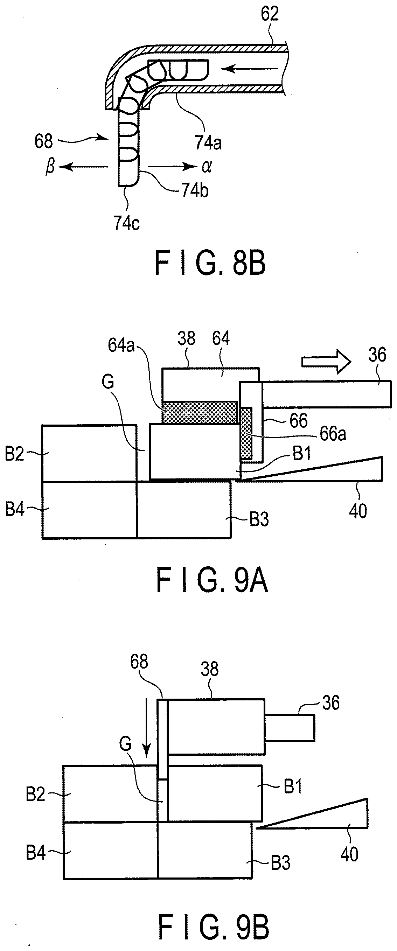

FIGS. 8A and 8B show still another example of the back face grip 68 with a claw different from the claws 68a and 68b shown in FIGS. 3A and 3B and the claw 72b shown in FIGS. 7A and 7B. Instead of the claws 68a and 68b shown in FIGS. 3A and 3B and the claw 72b shown in FIGS. 7A and 7B, a claw 74c, which will be described later and is shown in FIGS. 8A and 8B, can be used.

The back face grip 68 shown in FIGS. 8A and 8B has a guide 74a supported by the tip of the base 62 (see FIGS. 3A and 3B) of the grip 38, a chain 74b pushed out from the guide 74a, and the claw 74c provided distally to the chain 74b. The guide 74a is bent by, for example, 90° with respect to the X-axis. The chain 74b bends only in one direction (the negative Z-axis direction) from a linear state.

Note that the claw 74c of the chain 74b is formed so as to be able to rotationally move in the direction indicated by the reference sign α (the negative X-axis direction), but not to be deformed in the direction indicated by the reference sign β (the positive X-axis direction) in a deformation state shown in FIG. 8B. Thus, in a case where the package B1 is to be removed from the placement portion 12, the claw 74c presses the back face of the package B1 and places that package B1 on the lower support 40.

As described above, both the initial shape and the deformation state of the back face grip 68 can be maintained in various manners.

The controller 32 can determine the presence or absence of a gap between the packages B1 and B2. FIGS. 9A and 9B show an example of operation to form a gap between the back face of the package B1 and the front face of the package B2, which is used when the gap or the level difference between the back face of the package B1 and the front face of the package B2 could not be detected by the operation shown in FIGS. 6A and 6B.

In a case of the example shown in FIG. 9A, when the controller 32 has determined that there is no gap between the packages B1 and B2, the controller 32 causes the grip 38 to operate to perform the two-face grasping of the upper face and the front face and move the package B1 in the negative X-axis direction. Thus, by the operation of the grip 38 caused by the controller 32, a gap G can be formed between the back face of the package B1 and the front face of the package B2, and the back face grip 68 is disposed in the gap G between the back face of the package B1 and the front face of the package B2. The movement amount of the package B1 in the negative X-axis direction with respect to the package B3 under the package B1 to be grasped by the two-face grasping with the grip 38 may be smaller than, for example, that in the case of performing the two-face grasping described with FIG. 5.

Then, in a case of performing the back face grasping, the controller 32 disposes the back face grip 68 of the grip 38 on the back face side of the package B1. When the controller 32 draws the grip 38 in the negative X-axis direction in this state, that package B1 is drawn in the negative X-axis direction with respect to the package B3 under the package B1. Thus, the package B1 is taken out from the placement portion 12 in the negative X-axis direction and put on the lower support 40.

FIG. 10A is a schematic diagram showing a processing flow of the controller 32 as mainly to which grasping mode (the frictional grasping/the suction grasping/the back face grasping) is selected.

For example, it is presumed that the frictional grasping can be processed most quickly, the suction grasping can be processed second most quickly, and the processing to perform the back face grasping takes the longest time in order to grasp certain packages B1, B2 and so on one by one.

For example, in a case of grasping the upper face of a certain package B1 in a case of performing the frictional grasping and in a case of performing the suction grasping, both for the certain package B1, the grip 38 can be disposed on the upper face of the certain package B1 at the same speed. However, in a case of performing the suction grasping, it takes time to bring the package B1 into close contact with the grip 38 by driving the pump. On the other hand, in a case of performing the frictional grasping, the operation time of a pump or the like is not required. Thus, there is a possibility that it takes more time to perform the suction grasping than the frictional grasping for the certain package B1. Therefore, when the frictional grasping is selected rather than the suction grasping, it is presumed that it takes less time from the grasping by the grip 38 to the movement of the package B1 onto the conveyor 24 so that the movement time of the package B1 can be shortened.

In a case of performing the back face grasping, as described with FIGS. 6A to 9B, it is necessary to determine the presence or absence of a gap between a certain package B1 and a package B2 on the back face side thereof by the controller 32. Thus, there is a possibility that it takes time to insert the back face grip 68 between the back face of the certain package B1 and the front face of the package B2 on the back face side thereof. Meanwhile, before the certain package B1 is grasped, that package B1 is imaged by the camera 34. In order to prevent influences on the imaging, the grip 38 is normally at a position facing the front face of the package B1. Thus, in a case of moving the grip 38 to the back face along the positive X-axis direction rather than moving the grip 38 to the upper face of the package B1, there is a high possibility that the movement distance of the grip 38 becomes longer. Thus, in a case of performing the back face grasping, it is presumed that it takes more time to move the grip 38 than a case of performing the upper face grasping. Therefore, when the frictional grasping or the suction grasping is selected rather than the back face grasping, it is presumed that it takes less time from the grasping by the grip 38 to the movement of the package B1 onto the conveyor 24 so that the movement time of the package B1 can be shortened.

Therefore, the controller 32 according to the present example considers the frictional grasping first for a certain package B1, then considers the suction grasping, and considers the back face grasping at last.

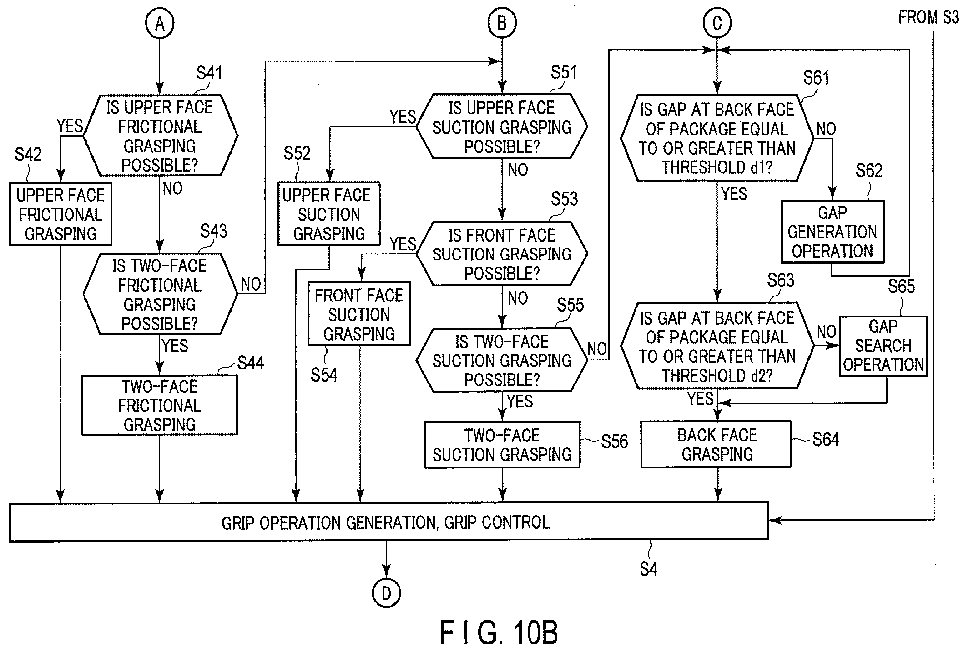

FIG. 10B is a schematic diagram showing that the controller 32 determines a detailed grasping mode as to any one or a plurality of the upper face/the front face/the back face of each package is grasped after the selection of any one of the grasping modes (the frictional grasping/the suction grasping/the back face grasping) has been decided by the processing flow shown in FIG. 10A, and the grasping operation is executed by the grip 38.

The two-face frictional grasping, in particular, the upper face frictional grasping and the front face frictional grasping are considered for a certain package B1. In a case of performing the upper face frictional grasping, the package B1 can be moved toward the lower support 40 by only the frictional grasping. On the other hand, even if only the front face of the package B1 is subjected to the frictional grasping, it is difficult to move the certain package B1 from the front face of the package B1 toward the lower support 40. Thus, in a case of performing the two-face frictional grasping, the upper face frictional grasping is mainly used, and the front face frictional grasping is secondarily used.

The two-face suction grasping, in particular, the upper face suction grasping and the front face suction grasping are considered for a certain package B1. The upper face suction grasping hardly frictionally affects a package B3 thereunder. Unlike the upper face suction grasping, there is a possibility that the front face suction grasping frictionally moves the package B3 thereunder to the front side. Thus, the upper face suction grasping is considered first, rather than the front face suction grasping.

In a case of considering the back face grasping for a certain package B1, for example, the size of the gap G between the back face of the package B1 and the front face of the package B2 is considered. In a case where the gap G is smaller than a predetermined state (a threshold d1), gap generation operation is required to insert the back face grip 68 into the gap G between the back face of the package B1 and the front face of the package B2.

The flowcharts shown in FIGS. 10A to 10C will be described. The flowcharts shown in FIGS. 10A to 10C are continuous. Note that, herein, the placement portion 12 on which the packages B1, B2, B3 and so on are placed is disposed at a predetermined position with respect to the conveyance apparatus 22.

Herein, the controller 32 disposes the arm 36, the grip 38 and the lower support 40 at the initial positions. As an example, the initial positions are positions that do not obstruct the camera 34 to photograph the packages B1, B2 and so on, on the placement portion 12.

First, the controller 32 acquires the image information on the packages B1, B2 and so on captured by the camera 34 (Step S1). In a case where the image information on the packages B1, B2 and so on could not be acquired, the processing is repeated until the image information can be obtained.

In a case where the image information on the packages B1, B2 and so on could have been acquired, the controller 32 determines, for example, that the package B1 on the frontmost upper side is a grasping target in the package determinator 54 by using a known technique, and the controller 32 searches whether or not the package image information 42a for the package B1 acquired by the camera 34 and the grasping mode information 42b for that package B1 are in the database 42 (Step S2). In a case where the package image information 42a for the package B1 acquired by the camera 34 and the grasping mode information 42b are in the database 42 (Yes in Step S2), the controller 32 selects a grasping mode by the grasping mode information 42b for that package B1 (Step S3). Thus, based on the image information on the packages B1, B2 and so on by the camera 34 and the information in the database 42, the controller 32 determines the sizes of the one or more packages B1, B2, B3 and so on and the availability of suction and determines which one of the upper face, the front face and the back face of the selected package B1 should be grasped.

The controller 32 causes the movement mechanism 44, the arm 36, the lower support 40 and the grip 38 to operate based on the grasping mode for that package B1 selected from the frictional grasping/the suction grasping/the back face grasping (Step S4). Note that there may be a case where the movement of the movement mechanism 44 is unnecessary.

In Step S4, while the package B1 is supported by the lower support 40, the grip 38 grasps the package B1 as appropriate as well as the arm 36, the grip 38, the lower support 40 and the movement mechanism 44 are operated to place the package B1 on the conveyor 24.

The controller 32 determines whether or not the grip 38 has successfully grasped the package B1 (Step S5). When it has been determined that the grip 38 has successfully grasped that package B1 (Yes in Step S5), the controller 32 determines whether the image information and the optimum grasping mode are registered in the database 42 (Step S6). When is has been determined that the package image information 42a and the optimum grasping mode information 42b are registered in the database 42 (Yes in Step S6), the controller 32 ends the processing for that package B1.

Then, the controller 32 acquires the image information on the packages B2, B3 and so on, which are placed on one placement portion 12, captured by the camera 34 (Step S7).

Note that, when the controller 32 has determined that the grip 38 has successfully grasped that package B1 (Yes in Step S5), the controller 32 may end the processing for that package B1. That is, when the controller 32 has determined that the grip 38 has successfully grasped that package B1 (Yes in Step S5), the processing in Step S6 is not necessarily required since the package image information 42a and the optimum grasping mode information 42b are already registered in the database 42.

When the image information on the packages B2, B3 and so on could have been acquired (Yes in Step S7), the controller 32 determines, for example, that the package B2 on the uppermost side is a grasping target by using a known technique. The controller 32 searches whether the package image information 42a for the package B2 acquired by the camera 34 and the grasping mode information 42b for that package B2 are in the database 42 (Step S2). Then, according to the flow described above or according to the flow described later, the controller 32 performs processing of grasping the package B2 to be conveyed onto the conveyor 24.

In a case where the image information on the packages placed on one placement portion 12 could not be acquired (No in Step S7), the controller 32 determines that no packages are present on that placement portion 12, and ends the processing of placing the packages, which are placed on one placement portion 12, onto the conveyor 24.

Note that, in a case where the controller 32 determines whether or not the grip 38 has successfully grasped the package B1, various sensors provided at the grip 38 are used. As an example, in a case where a weight sensor is provided at the grip 38 and the weight of the grasped package B1 is lower than a peak value before the placement onto the lower support 40 or the conveyor 24, the controller 32 determines that the grasping of the package B1 has failed.

In a case where the image information for the package B1 acquired by the camera 34 is not in the database 42 (No in Step S2), the controller 32 determines whether there is a flat face on the upper face of that package B1 from the image information acquired by the camera 34.

When the controller 32 has determined that that package B1 does not have a flat face and that package B1 has a shape different from a box shape (No in Step S11), the package B1 cannot be subjected to the frictional grasping or the suction grasping. That is, since that package B1 cannot be subjected to the upper face grasping shown in FIG. 4A or the front face grasping shown in FIG. 4B, the back face grasping (Step S12) shown in FIG. 4C is selected.

When it has been determined that that package B1 has a flat face and that package B1 has a box shape (Yes in Step S11), the controller 32 determines whether there is a label, wrapping paper or vinyl on that package B1 from the image information acquired by the camera 34 (Step S21).

When the controller 32 has determined that there is a label, wrapping paper or vinyl on that package B1 (Yes in Step S21), it is difficult to or impossible to perform the frictional grasping or the suction grasping for that package B1 so that the back face grasping (Step S12) is selected.

When it has been determined that there is no label, wrapping paper or vinyl on that package B1 (No in Step S21), the controller 32 determines whether the volume of the package B1 is equal to or less than a threshold V1 from the image information acquired by the camera 34 (Step S22). Note that, in addition to the threshold V1 of the volume of the package B1, if the package B1 has a box shape, a threshold for the sum of the three sides having a common vertex may be set as appropriate.

In a case where the volume of the package B1 is equal to or less than the threshold V1 (Yes in Step S22), there is a possibility that that package B1 is light. Then, since the frictional grasping can be performed faster than the suction grasping, the controller 32 selects the frictional grasping (Step S23) in a case where the volume of the package B1 is less than the threshold V1.

In a case where the volume of the package B1 is greater than the threshold V1 (No in Step S22), the controller 32 determines whether the volume of the package B1 is equal to or less than a threshold V2 (> V1) from the image information acquired by the camera 34 (Step S31).

In a case where the volume of the package B1 is greater than the threshold V2 (No in Step S31), there is a possibility that the package B1 is heavy. In a case where the package B1 is heavier than a predetermined weight, the controller 32 selects the back face grasping (Step S12) since the suction grasping cannot be performed.

In a case where the volume of the package B1 is equal to or less than the threshold V2 (Yes in Step S31), the controller 32 determines that the package B1 has a weight that can be subjected to the suction grasping, and selects the suction grasping (Step S32).

In this manner, the grasping mode determinator 56 of the controller 32 selects a grasping mode according to the exterior of the package B1. That is, the controller 32 selects a grasping mode according to the package B1. Thus, based on the image information on the packages B1, B2 and so on by the camera 34 and the information in the database 42, the controller 32 determines the sizes of the one or more packages B1, B2, B3 and so on and the availability of suction and determines which one of the upper face, the front face and the back face of the selected package B1 should be grasped. The selection of the grasping mode at this time is first determination.

After the first optimum grasping mode is determined by the grasping mode determinator 56, the controller 32 transmits and receives signals to and from the arm 36, the grip 38 and the lower support 40 as shown in FIG. 10B to perform the grip control.

In a case where the controller 32 has selected the frictional grasping (Step S23), the controller 32 determines whether the frictional grasping is possible by the pads or the like for upper face of the package B1 from the size and exterior of the package B1 (Step S41). When the frictional grasping is possible (Yes in Step S41), the controller 32 selects the upper face frictional grasping (Step S42).

When it has been determined that the frictional grasping is not possible for the upper face of the package B1 (No in Step S41), the controller 32 determines whether the two-face frictional grasping is possible based on the size of the package B1 (Step S43). The two-face frictional grasping is a mode of grasping both the upper face and the front face of that package B1 with the pads or the like. Then, when it has been determined that the two-face frictional grasping is possible for that package B1 (Yes in Step S43), the controller 32 selects the two-face frictional grasping (Step S44). Then, the controller 32 transmits and receives signals to and from the arm 36, the grip 38 and the lower support 40 and causes them to operate as appropriate (Step S4).

When the controller 32 has determined that the upper face frictional grasping and the two-face frictional grasping are not possible for that package B1 (No in Step S43), the controller 32 switches the grasping mode for that package B1 from the frictional grasping (Step S23) to the suction grasping (Step S32).

In the suction grasping (Step S32), the controller 32 determines whether the upper face suction grasping is possible based on the size and exterior of the package B1 (Step S51). When it has been determined that the upper face suction grasping is possible for that package B1 (Yes in Step S51), the controller 32 selects the upper face suction grasping (Step S52). That is, the controller 32 transmits and receives signals to and from the arm 36, the grip 38 and the lower support 40 and causes them to operate as appropriate (Step S4).

When the controller 32 has determined that the upper face suction grasping is not possible for that package B1 (No in Step S51), the controller 32 determines whether the front face suction grasping is possible for that package B1 based on the size and exterior of that package B1 (Step S53) .

When it has been determined that the front face suction grasping is possible for that package B1 (Yes in Step S53), the controller 32 selects the front face suction grasping (Step S54). Then, the controller 32 transmits and receives signals to and from the arm 36, the grip 38 and the lower support 40 and causes them to operate as appropriate (StepS4).

When the controller 32 has determined that the front face suction grasping is not possible for that package B1 (No in Step S53), the controller 32 determines whether the two-face suction grasping is possible for that package B1 based on the size and exterior of that package B1 (Step S55) .

When it has been determined that the two-face suction grasping is possible for that package B1 (Yes in Step S55), the controller 32 selects the two-face suction grasping (Step S56). Then, the controller 32 transmits and receives signals to and from the arm 36, the grip 38 and the lower support 40 and causes them to operate as appropriate (Step S4).

When the controller 32 has determined that the upper face suction grasping (Step S51), the front face suction grasping (Step S53) and the two-face suction grasping (Step S55) are not possible for that package B1 (No in Step S55), the controller 32 switches the grasping mode for that package B1 from the suction grasping (Step S32) to the back face grasping (Step S12).

Based on the image information acquired by the camera 34, the controller 32 determines whether the gap G between the back face of the package B1 and the front face of the package B2 is equal to or greater than the threshold d1 (Step S61).

In a case where the gap G is less than the threshold d1 or the gap G could not be detected (No in Step S61), the controller 32 performs the gap generation operation by the suction grasping or the frictional grasping as shown in FIG. 9A (Step S62). Thereafter, the controller 32 detects the gap G from the image information acquired by the camera 34 again. When the gap G is greater than the threshold d1 (Yes in Step S61), the controller 32 further determines whether the gap is equal to or greater than a threshold d2 (> d1) (Step S63) .

In a case where the controller 32 has determined that the gap G is greater than the threshold d2 (Yes in Step S63), the gap search operation is unnecessary even when the detection error is taken into consideration, and the back face grasping is directly selected (Step S64).

In a case where the frictional grasping, the suction grasping or the back face grasping is performed by the grip 38 in this manner, the controller 32 determines any one or a plurality of the upper face, the front face and the back face of the one or more packages B1 to be grasped based on the image information photographed by the camera 34 and the information in the database 42.

Then, the controller 32 transmits and receives signals to and from the arm 36, the grip 38 and the lower support 40 and causes them to operate as appropriate (Step S4).

In a case where it has been determined that the gap G is less than the threshold d2 (No in Step S63), the controller 32 moves the back face grip 68 of the grip 38 as appropriate to perform the gap search operation in order to cope with a case where the detected position is shifted from the actual position due to a detection error or the like (Step S65). Then, the controller 32 detects the accurate position of the gap G between the packages B1 and B2, transmits and receives signals to and from the arm 36, the grip 38 and the lower support 40, causes them to operate as appropriate, and selects the back face grasping for the package B1 (Step S4).

In this manner, the controller 32 transmits and receives signals to and from the arm 36, the grip 38 and the lower support 40, causes them to operate as appropriate, and grasps the package B1 with an appropriate mode. Then, the package B1 is placed on the conveyor 24.

When the package B1 is placed on the conveyor 24, the grip 38 and the lower support 40 are separated from the front face of the package B3. At this time, images of the packages B2, B3, B4 are acquired again by the camera 34 after the package B1 has been removed. Thereafter, the grip 38 and the lower support 40 return to the initial positions with respect to the placement portion 12.

The controller 32 detects whether or not the graspingS by the grip 38 has been successful (Step S5). When the controller 32 has determined that the grasping by the grip 38 has been successful, it is determined whether the image information on the package B1 and the optimum grasping mode are registered in the database 42 (Step S6). When they are registered (Yes in Step S6), the processing ends. When they are not registered (No in Step S6), the image information on the package B1 and the optimum grasping mode are registered in the database 42 (Step S70).

When it has been determined that the grasping by the grip 38 has failed (No in Step S5), the controller 32 registers the image information on the package B1 and the information on the improper grasping mode in the database 42 (Step S80). Then, the controller 32 determines again a package to be grasped from among the packages B1, B2, B3 and so on. The controller 32 acquires the image information on the grasping package B1 by the camera 34 (Step S1) and performs again the series of processing shown in FIGS. 10A to 10C.

That is, when it has been determined that the grasping of that package B1 has failed after that package B1 is grasped by the grip 38 while the package B1 is supported by the lower support 40 from the lower support 40 (e.g., a case of first failure), the controller 32 determines the size of that package B1 and the availability of suction and determines again which one of the upper face, the front face and the back face of that package B1 should be grasped.

Note that, in a case where the controller 32 has caused the movement mechanism 44, the arm 36, the lower support 40 and the grip 38 to operate (Step S4), the weight of the package B1 can be estimated since the grip 38 has tried to grasp the package B1. Thus, the frictional grasping (Step S23), the suction grasping (Step S32) or the back face grasping (Step S12) is selected as appropriate in conjunction with the weight data of the package B1.

For example, when the controller 32 selected the frictional grasping (Step S23) and determined that the upper face frictional grasping is possible (Yes in Step S41) in the first processing when the grasping of that package B1 failed, it can be determined that the upper face frictional grasping is not possible (No in Step S41) in the next processing by the improper grasping mode registered in the database 42 together with the weight data of that package B1 as determination basis.

For example, when is has been determined that the grip 38 had failed to grasp the package B1, in particular, a case where that the grasping of that package B1 had failed by performing the upper face frictional grasping, as the next determination, the controller 32 may select the two-face frictional grasping for the package B1, determine that the suction grasping is performed instead of selecting the two-face frictional grasping, or determine that the back face grasping is performed for the package B1. Moreover, for example, when is has been determined that the grip 38 had failed to grasp the package B1, in particular, a case where that the grasping of that package B1 had failed by performing the front face suction grasping, as the next determination, the controller 32 may select the two-face suction grasping for the package B1 or determine that the back face grasping is performed instead of selecting the two-face suction grasping.

Note that, even in a case where it has been determined that the image information is in the database 42 (Yes in Step S2), when the grasping by the grip 38 has failed (No in Step S5), the information in the database 42 is rewritten. Thus, there may be a case where it is not determined that the image information is in the database 42. Thus, the grasping mode may be changed.

The controller 32 controls the arm 36, the grip 38 and the lower support 40 to, for example, place the package B1 on the conveyor 24. The conveyor 24 conveys the package B1 placed thereon toward a predetermined position. The controller 32 selects the next package B2 and likewise controls the arm 36, the grip 38 and the lower support 40 to perform the work of grasping the next package B2.

In a case where the grasping of that package B1 has failed a plurality of times, for example, two or more times such as three times or four times, the controller 32 outputs an error and stops the arm 36, the grip 38 and the lower support 40. The number of failures until the arm 36, the grip 38 and the lower support 40 of the conveyance apparatus 22 are stopped when the grip 38 had tried to grasp the same package B1 is suitably plural, but the number can be set as appropriate.

Note that, in a case where the grasping of the package B1 has failed a plurality of times, for example, two times or the like, the controller 32 can suppress the failure in next grasping by selecting and executing the back face grasping for that package B1. Then, the operation of the conveyance apparatus 22 is continued so that the processing of the packages B1, B2 and so on can be continued.

As described above, in the conveyance apparatus 22 of the unloading system 10 according to the present example, even in a case where the packages with various sizes are stacked complicatedly, the packages B1, B2, B3 and so on can be removed from the placement portion 12 and placed on the conveyor 24 in an appropriate removal order. Moreover, the placement portion 12 should be disposed at a position facing the unloading system 10 (the conveyance apparatus 22). Thus, it is unnecessary to arrange part of the unloading system 10 (the conveyance apparatus 22) on the back face side of the placement portion 12.

In the conveyance apparatus 22, the frictional grasping with the fastest processing speed for one package is a first option, the next fast suction grasping is a second option, and the back face grasping is a third option at last. Then, the controller 32 can select the frictional grasping, the suction grasping and the back face grasping as appropriate according to the packages B1, B2 and so on. Thus, the processing of placing all the packages, which are placed on the placement portion 12, on the conveyor 24 can be performed more efficiently than performing one grasping method, for example, the suction grasping or the like, for all the packages. Therefore, it is possible to shorten the time to place all the packages on the conveyor 24 from one placement portion 12.

The first example can provide a conveyance apparatus, a conveyance system and a conveyance method, which can automatically determine grasping mode of one or more packages and execute grasping.

Moreover, in the conveyance apparatus 22 of the system 10 according to the present example, even in a case of performing the frictional grasping, the failure in the grasping can be suppressed by making the upper face frictional grasping/the two-face frictional grasping as options according to the states of the packages. Likewise, in the conveyance apparatus 22 of the system 10 according to the present example, even in a case of performing the suction grasping, the failure in the grasping can be suppressed by making the upper face suction grasping/the front face suction grasping/the two-face suction grasping as options according to the states of the packages. Furthermore, in the conveyance apparatus 22 of the system 10 according to the present example, even in a case of performing the back face grasping, the failure in the grasping can be suppressed by forming a gap between the packages according to the mutual states of the packages. Therefore, by using the conveyance apparatus 22 of the system 10 according to the present example, it is possible to suppress the failure to grasp each package.

Note that, in the present example, the example has been described in which the package B2 is present on the back face side of the package B1. Even when the package B2 is not present on the back face side of the package B1, the package B1 can be grasped by the grip 38 while being supported by the lower support 40 as described above, and that package B1 can be placed on the conveyor 24. Thus, the space or the wall of the placement portion 12 may be present on the back face side of the package B1.

Note that the example in which the packages B1, B2, B3 and so on are removed one by one from the placement portion 12 has been described in the first example, but the plurality of packages B1, B2 and so on may be simultaneously grasped and put on the lower support 40 depending on the disposition, the sizes and the like of the packages.

### (FIRST MODIFICATION EXAMPLE)

A first modification example is a further modification example of the first example.

According to the first modification example, the conveyance system further includes a controller (processor)including a communicator. The controller (processor) is configured to control the communicator, and access a database through the communicator in which information on the one or more packages is stored. The controller (processor) is configured to determine which (one of) grasping mode of frictional grasping, suction grasping and back face grasping should be selected based on the image information photographed by the camera and the information in the database, is configured to move the arm and the grip based on the determination, and take out the one or more packages from the placement portion while at least one of the one or more packages is grasped by the grip by moving the arm and the grip.

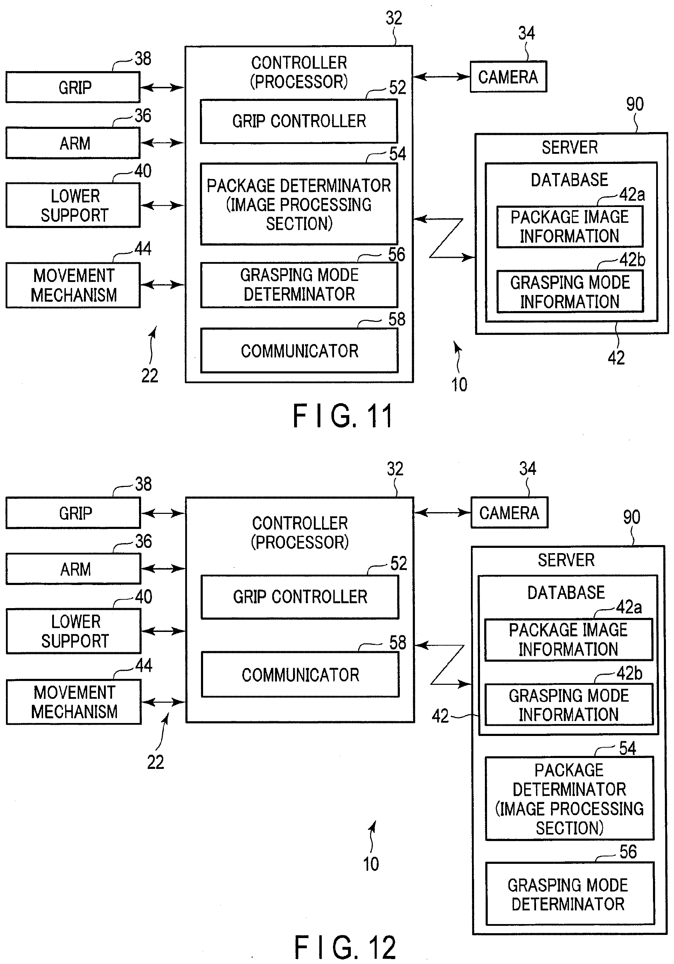

As shown in FIG. 11, a system 10 has a conveyance apparatus 22 and a server 90. The conveyance apparatus 22 has a controller 32, a camera 34, an arm 36, a grip 38, a lower support 40 and a movement mechanism 44. The controller 32 includes a communicator 58. The controller 32 is configured to control the communicator 58. The communication by the communicator 58 may be wired or wireless. As an example, the communicator 58 can access a database 42 stored on the server 90 via a network. Thus, the conveyance apparatus 22 of the present modification example does not include the database 42 of the server 90.

By being communicated by the communicator 58, the controller 32 can read out data (information) stored in the database 42. Moreover, by being communicated by the communicator 58, the controller 32 can store data (information) in the database 42 as appropriate.

Thus, the system 10 can connect a plurality of conveyance apparatuses 22 at not only one location but also a large number of locations to the network to share package image information 42a and grasping mode information 42b. As described above, in the database 42, the image information (package image information) 42a on a predetermined package and the grasping mode information 42b corresponding to the predetermined package image information 42a on a one-to-one basis are stored. In this manner, by obtaining not only information from one conveyance apparatus 22 but also information from other conveyance apparatuses 22, it is possible to increase the number of pieces of information corresponding on a one-to-one basis. Therefore, in the flows shown in FIGS. 10A to 10C, the probability from Step S2 to Step S3 can be gradually increased. Thus, it is possible to proceed to Step S4 in which the arm 36, the grip 38 and the lower support 40 are moved more efficiently.

As described above, in the unloading system 10 according to the present modification example, frictional grasping with the fastest processing speed for one package is a first option, the next fast suction grasping is a second option, and back face grasping is a third option at last. Then, the controller 32 can select the frictional grasping, the suction grasping and the back face grasping as appropriate according to the packages B1, B2 and so on. Thus, the processing of placing all the packages, which are placed on the placement portion 12, on the conveyor 24 can be performed more efficiently than performing one grasping method, for example, the suction grasping or the like, for all the packages. Therefore, it is possible to shorten the time to place all the packages on the conveyor 24 from one placement portion 12.

Moreover, in the system 10 according to the present modification example, even in a case of performing the frictional grasping, the failure in the grasping can be suppressed by making upper face frictional grasping/two-face frictional grasping as options according to the states of the packages. Likewise, in the system 10 according to the present modification example, even in a case of performing the suction grasping, the failure in the grasping can be suppressed by making upper face suction grasping/front face suction grasping/two-face suction grasping as options according to the states of the packages. Furthermore, in the system 10 according to the present modification example, even in a case of performing the back face grasping, the failure in the grasping can be suppressed by forming a gap between the packages according to the mutual states of the packages. Therefore, by using the system 10 according to the present modification example, it is possible to suppress the failure to grasp each package.

### (SECOND MODIFICATION EXAMPLE)

A second modification example is a further modification example of the first modification example.

According to the second modification example, the controller (processor) of the conveyance system is configured to control the communicator, and access a database on a server through the communicator. The controller (processor) is configured to move the arm and the grip based on a result determined on the server as to which grasping mode of frictional grasping, suction grasping and back face grasping should be selected from the image information photographed by the camera and information in the database, and is configured to take out the one or more packages from the placement portion by moving the arm and the grip while at least one of the one or more packages is grasped by the grip.

As shown in FIG. 11, a system 10 has a conveyance apparatus 22 and a server 90. In the present modification example, the server 90 can be used as a controller different from a controller 32 of the conveyance apparatus 22. The conveyance apparatus 22 has a controller 32, a camera 34, an arm 36, a grip 38, a lower support 40 and a movement mechanism 44. The controller 32 includes a communicator 58. The controller 32 is configured to control the communicator 58. The communication by the communicator 58 may be wired or wireless. As an example, the communicator 58 can access a database 42 stored in the server 90 via a network. Thus, the conveyance apparatus 22 of the present modification example does not include the database 42 of the server 90.

In the present modification example, a program (a package determinator 54) that determines a package to be grasped from among packages B1, B2, B3 and so on and also a program (a grasping mode determinator 56) that determines the grasping mode for the selected package B1 are executed by the server 90, and control signals thereof are transmitted to the controller 32 via the communicator 58 to control the movements of the arm 36, the grip 38, the lower support 40 and the movement mechanism 44. Thus, the controller 32 of the present modification example does not include the package determinator (an image processing section) 54 and the grasping mode determinator 56. That is, in the server 90, the server (the controller) 90 determines which one of the upper face, the front face and the back face of the certain package B1 should be grasped by the grip 38 based on image information photographed by the camera 34 and information in the database 42.

The controller 32 of the conveyance apparatus 22 receives the determination result by the server 90 as to which one of the upper face, the front face and the back face of the package B1 is to be grasped. Thus, the controller 32 (a grip controller 52) moves the arm 36, the grip 38 and the lower support 40 and takes out the package B1 from the placement portion 12 by moving the arm 36, the grip 38 and the lower support 40 while the package B1 is grasped by the grip 38 and the package B1 is supported by the lower support 40 from the lower side.

FIG. 12 shows that the controller 32 has the grip controller 52. The arm 36, the grip 38 and the movement mechanism 44 may be operated by control via the communicator 58. That is, the server 90 may execute a program (the grip controller 52) that causes the arm 36, the grip 38 and the movement mechanism 44 to operate.

Although not shown, a communicator (not shown) may be arranged in the camera 34 to transmit the image information captured by the camera 34 directly to the server 90, not via the controller 32. In this case, the package determinator 54 of the server 90 detects which package to be grasped from among the packages B1, B2 and so on and the edges of the packages B2 and B3 adjacent to the package B1 to be grasped.

As described above, in the unloading system 10 according to the present modification example, by the instruction of the server 90, frictional grasping with the fastest processing speed for one package is a first option, the next fast suction grasping is a second option, and back face grasping is a third option at last. Then, the server 90 can select the frictional grasping, the suction grasping and the back face grasping as appropriate according to the packages B1, B2 and so on. Thus, the processing of placing all the packages, which are placed on the placement portion 12, on the conveyor 24 can be performed more efficiently than performing one grasping method, for example, the suction grasping or the like, for all the packages. Therefore, it is possible to shorten the time to place all the packages on the conveyor 24 from one placement portion 12 .

Moreover, in the system 10 according to the present modification example, even in a case of performing the frictional grasping, the failure in the grasping can be suppressed by making upper face frictional grasping/two-face frictional grasping as options according to the states of the packages. Likewise, in the system 10 according to the present modification example, even in a case of performing the suction grasping, the failure in the grasping can be suppressed by making upper face suction grasping/front face suction grasping/two-face suction grasping as options according to the states of the packages. Furthermore, in the system 10 according to the present modification example, even in a case of performing the back face grasping, the failure in the grasping can be suppressed by forming a gap between the packages according to the mutual states of the packages. Therefore, by using the system 10 according to the present modification example, it is possible to suppress the failure to grasp each package.

### (SECOND EXAMPLE)

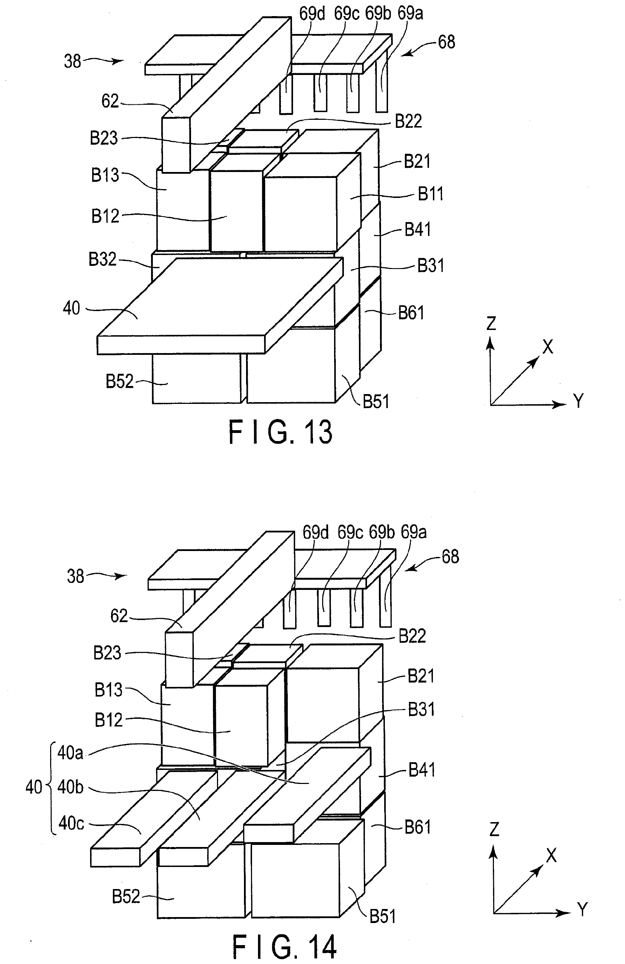

Next, a second example will be described using FIG. 13. The present example is a further modification example of the first example including each modification example.

An objective according to the second example is to provide a conveyance apparatus, a conveyance system and a conveyance method, which can automatically determine a grasping method of one or more packages and execute grasping.

In the present example, a grip 38 can grasp one or more packages in a case of performing back face grasping. Thus, the grip 38 can grasp at least one of one or more packages. An arm 36 moves the grip 38 in the positive X-axis direction toward one or more packages imaged by one or more cameras 34 as well as moves the grip 38 in the negative X-axis direction from a placement portion 12 to be retracted in a state where the one or more packages are grasped by the grip 38. A lower support 40 takes out the one or more packages from the placement portion 12 while supporting the one or more packages, which are moved by the grip 38, from the lower side.

Note that a controller 32 can determine, by using images obtained from the one or more cameras 34, whether or not a plurality of packages B11, B12, B13, B21, B22 and B23 can be simultaneously placed on the lower support 40 with a known technique.

FIG. 13 shows a state where the plurality (herein, six) of packages B11, B12, B13, B21, B22 and B23 are moved with respect to packages B31, B32, B41 and so on by the back face grasping of the grip 38 and are about to be put on the lower support 40. A back face grip 68 of the grip 38 has an appropriate width, for example, narrower than the horizontal width of the placement portion 12 along the Y-axis direction. The back face grip 68 has a plurality of claws 69a, 69b and so on deformed as appropriate. Note that, for example, the claws 68a, 68b, 72b, 74c, 78a, 78b and 78c shown in FIGS. 3A and 3B, FIGS. 7A and 7B and FIGS. 8A and 8B are applied to the claws 69a, 69b and so on as appropriate.

Note that the grip 38 suitably not only has the back face grip 68 but also has an upper face grip 64 and a front face grip 66 described in the first example.

In the present example, the box-shaped packages B31, B32, B41 and so on are stacked on the upper faces of box-shaped packages B51, B52, B61 and so on. The heights of the box-shaped packages B31, B32, B41 and so on in the Z-axis direction are substantially the same. Then, each of the packages B11, B12, B13, B21, B22 and B23 is placed on the upper faces of the packages B31, B32, B41 and so on with substantially the same heights in the Z-axis direction.

A package determinator 54 of the controller 32 determines that each of the packages B11, B12, B13, B21, B22 and B23 is placed on the upper faces of the packages B31, B32, B41 and so on at positions substantially the same in the Z-axis direction. At this time, the packages B11, B12 and B13 are disposed on the front side, and the packages B21, B22 and B23 are disposed on the back side.

Note that each of the packages B11, B12, B13, B21, B22 and B23 is not limited to a box shape (rectangular parallelepiped), and various shapes such as a paper bag, an envelope and a columnar shape are allowed. The packages B31, B32, B41 and so on and B51, B52, B61 and so on are also not necessarily a box shape.

The package determinator 54 of the controller 32 detects the lower edges of the packages B11, B12 and B13 by image information from the camera 34.

The controller 32 (or a server 90) has determined that the packages B11, B12, B13, B21, B22 and B23 are simultaneously put on the lower support 40.

A grip controller 52 of the controller 32 moves the lower support 40 in the positive X-axis direction and makes the lower support 40 near or abut the front faces of the packages B31 and B32 slightly under the lower edges of the packages B11, B12 and B13.

The grip controller 52 of the controller 32 makes the tip of the lower support 40 near the lower edges of the front faces of the packages B11, B12 and B13 removed from the placement portion 12 as well as disposes the tip slightly under the lower edges of the front faces of the packages B11, B12 and B13. The grip controller 52 of the controller 32 disposes the back face grip 68 of the grip 38 on the back face sides of the packages B21, B22 and B23. Then, the controller 32 disposes the claws 69a, 69b and so on of the back face grip 68 on the back face sides of the packages B21, B22 and B23.

The controller 32 causes the grip 38 (the back face grip 68) to operate in the negative X-axis direction in a state where the lower support 40 is made near or abut the front faces of the packages B31 and B32. Thus, those packages B11, B12, B13, B21, B22 and B23 are drawn in the negative X-axis direction with respect to the packages B31, B32, B41 and so on under the packages B11, B12, B13, B21, B22 and B23. Thus, the packages B11, B12, B13, B21, B22 and B23 are taken out from the placement portion 12 in the negative X-axis direction and put on the lower support 40. Thereafter, the grip controller 52 of the controller 32 puts the packages B11, B12, B13, B21, B22 and B23 on a conveyor 24.

In this case, for example, it is possible to put the six packages B11, B12, B13, B21, B22 and B23 simultaneously on the lower support 40 and put these packages B11, B12, B13, B21, B22 and B23 on the conveyor 24. Thus, even in a case of performing the back face grasping, depending on the number of packages processed simultaneously, for example, the six packages B11, B12, B13, B21, B22 and B23, or the like, it is possible to improve the conveyance speeds of the packages as a whole as compared with a case where frictional grasping or suction grasping is performed for each package.

Therefore, in a case of simultaneously grasping the plurality of packages B11, B12, B13, B21, B22 and B23 to be placed on the lower support 40, the back face grasping can be a first option unlike the first example where the packages B1, B2 and so on are grasped one by one and supported by the lower support 40.

Then, an unloading system 10 (a conveyance apparatus 22) can combine as appropriate a mode of selecting packages one by one with the controller 32 (or the server 90) to be removed from the placement portion 12, which has been described in the first example including each modification example, and a mode of simultaneously selecting the plurality of packages with the controller 32 (or the server 90) to be removed from the placement portion 12, which has been described in the present example. Thus, by combining these modes as appropriate, it is possible to take out all the packages placed on one placement portion 12 in a shorter period of time and place them on the conveyor 24.

The second example can provide a conveyance apparatus, a conveyance system and a conveyance method, which can automatically determine grasping mode of one or more packages and execute grasping.

### (FIRST MODIFICATION EXAMPLE)

In the present modification example, a modification example of the case where the back face grasping is performed for the plurality of packages, which has been described in the second example, will be described.

As shown in FIG. 14, in the present modification example, a lower support 40 has a plurality of lower support plates 40a, 40b and 40c. The number of lower support plates 40a, 40b and 40c is three herein, but may be more. As an example, the width of each of the lower support plates 40a, 40b and 40c along the Y-axis direction is set to be the width substantially the same as the size of the package, which is presumed to be the minimum size. The width of each of the lower support plates 40a, 40b and 40c along the Y-axis direction can be set as appropriate.

A grip controller 52 of a controller 32 can independently move each of the lower support plates 40a, 40b and 40c in the positive X-axis direction and the negative X-axis direction. The grip controller 52 of the controller 32 can move each of the lower support plates 40a, 40b and 40c together in the same direction in the positive Y-axis direction and the negative Y-axis direction. In this manner, each of the lower support plates 40a, 40b and 40c is independently driven in the forward direction (the positive X-axis direction) heading toward a placement portion 12 and in the backward direction (the negative X-axis direction) retracting from the placement portion 12 by signals from the controller 32. The grip controller 52 of the controller 32 can suitably independently move each of the lower support plates 40a, 40b and 40c in the positive Z-axis direction and the negative Z-axis direction. Thus, each of the lower support plates 40a, 40b and 40c can be independently driven in the upward direction (the positive Z-axis direction) and in the downward direction (the negative Z-axis direction) by signals from the controller 32.

A package determinator 54 of the controller 32 (or a server 90) detects the lower edges of packages B12, B13 and B21. The grip controller 52 of the controller 32 makes the lower support 40 near or abut the front faces of packages B31, B32 and B41 slightly under the lower edges of the packages B12, B13 and B21. Herein, the tip of the lower support plate 40a is made near or abut the front face of the package B41 slightly under the lower edge of the package B21. The tip of the lower support plate 40b is made near or abut the front face of the package B31 slightly under the lower edge of the package B12. The tip of the lower support plate 40c is made near or abut the front face of the package B31 slightly under the lower edge of the package B13.

The controller 32 disposes claws 69a, 69b and so on of a back face grip 68 of a grip 38 at the back faces of packages B21, B22 and B23 in a state where the lower support plate 40a is made near or abut the front face of the package B41 and the lower support plates 40b and 40c are made near or abut the front face of the package B31. In this state, the controller 32 causes the grip 38 to operate in the negative X-axis direction to draw the packages B12, B13, B21, B22 and B23 in the negative X-axis direction with respect to the packages B31, B41 and so on. Thus, the package B21 is put on the lower support plate 40a. The packages B12 and B22 are put on the lower support plate 40b. The packages B13 and B23 are put on the lower support plate 40c. Thus, the plurality of packages B12, B13, B21, B22 and B23 are simultaneously placed on a conveyor 24.

By forming the lower support 40 divided into the plurality of lower support plates 40a, 40b and 40c, even in a case where the position of the front face of each of the packages is shifted in the X-axis direction, it is possible to simultaneously put the packages on the conveyor 24. Thus, even in a case of performing the back face grasping, depending on the number of packages processed simultaneously, for example, the five packages B12, B13, B21, B22 and B23, or the like, it is possible to improve the conveyance speeds of the packages as a whole as compared with a case where frictional grasping or suction grasping is performed for each package.

### (SECOND MODIFICATION EXAMPLE)

In the present modification example, a further modification example of the case where the back face grasping is performed for the plurality of packages, which has been described in the second example including the first modification example, will be described.

As shown in FIG. 15, a back face grip 68 has rods 76a, 76b and 76c which can expand and contract along the X-axis direction, and claws 78a, 78b and 78c at the tips of the rods 76a, 76b and 76c. The plurality of rods 76a, 76b and 76c are provided at the tip portion of a base 62 of a grip 38. The positions of the claws 78a, 78b and 78c along the X-axis direction are independently adjusted by the expansion and contraction of the rods 76a, 76b and 76c, respectively. Thus, this back face grip 68 can independently move the plurality of claws 78a, 78b and 78c with respect to the back face of one or more packages.

The claw 78a with respect to the rod 76a can be suitably deformed between an initial shape and a deformation state as in the examples shown in FIGS. 7A and 7B or the examples shown in FIGS. 8A and 8B. Likewise, the claw 78b with respect to the rod 76b and the claw 78c with respect to the rod 76c can be suitably deformed between an initial shape and a deformation state.

The rods 76a, 76b and 76c are provided in a state of protruding from the tip of the base 62. In a case where the number of rods 76a, 76b and 76c is three, these rods can suitably expand and contract, but at least two of the rods should be able to expand and contract. In the case where the number of rods is two, these rods can suitably expand and contract, but at least one of the rods should be able to expand and contract.

In the examples shown in FIGS. 13 and 14, the examples have been described in which the claws of the back face grip 68 are on one plane parallel to the YZ plane. In the present modification example, as for the claws 78a and 78b of the back face grip 68, at least two of the rods 76a, 76b and 76c move along the X-axis direction. Thus, the claws 78a, 78b and 78c may be on one plane parallel to the YZ plane, but they may be separately disposed on two planes parallel to the YZ plane or on three planes parallel to YZ plane.

Using FIG. 16, a description will be given of a case where such a back face grip 68 has three rods 76a, 76b and 76c and the claws 78a, 78b and 78c.

As shown in FIG. 16, the position of the back face of a package B21 and the position of the back face of a package B22 are greatly shifted along the X-axis direction. There is no package present on the front face side and back face side of the package B21. There is a package B41 under the package B21.

Then, there are two packages B12 and B13 on the front face side of the package B22. There is a package B31 under the packages B12, B13 and B22.

The upper face of the package B31 and the upper face of the package B41 are shifted in the Z-axis direction.

In this case, a grip controller 52 of a controller 32 makes the tip of a lower support plate 40a of a lower support 40 near or abut the front face of the package B41 slightly under the lower edge of the package B21 to be grasped. The grip controller 52 of the controller 32 makes the tips of lower support plates 40b and 40c of the lower support 40 near or abut the front face of the package B31 slightly under the lower edges of the packages B12 and B13 to be grasped.

The controller 32 disposes the claws 78a, 78b and 78c of the back face grip 68 of the grip 38 at the back faces of the packages B21 and B22 in a state where the lower support plates 40a and 40b are made near or abut the front face of the package B31 and the lower support plate 40c is made near or abut the front face of the package B41. In this state, the controller 32 causes the grip 38 to operate in the negative X-axis direction to draw the package B21 in the negative X-axis direction with respect to the package B41 as well as to draw the packages B12, B13 and B22 in the negative X-axis direction with respect to the package B31. Thus, the package B21 is put on the lower support plate 40a. The package B12 is put on the lower support plate 40b. The package B13 is put on the lower support plate 40c. Moreover, the package B22 is put on the lower support plates 40b and 40c. Thus, the plurality of packages B12, B13, B21 and B22 are simultaneously placed on a conveyor 24.

In the present modification example, by separately controlling the lower support plates 40a, 40b and 40c of the lower support 40 for the positions of the front faces of the respective packages, the plurality of packages with the front faces not aligned not only in the X-axis direction but also in the Z-axis direction can be simultaneously put on the lower support 40. Moreover, the plurality of packages with the respective back faces not aligned in the X-axis direction can be simultaneously put on the lower support 40.

## Claims

1. A conveyance apparatus (22) comprising:
a camera (34) that is configured to acquire image information (42a) on one or more packages stacked on a placement portion (12);
a grip (38) that is configured to grasp at least one of the one or more packages;
an arm (36) that is configured to move the grip (38) toward the one or more packages imaged by the camera (34) and is configured to retract the grip (38) from the placement portion (12) in a state where the one or more packages are grasped by the grip (38);
a database (42) in which information on the one or more packages is stored; and
a processor (32) that is configured to:
determine which grasping mode of frictional grasping, suction grasping and back face grasping should be selected from the image information (42a) photographed by the camera (34) and the information in the database (42), the frictional grasping being for frictionally grasping the one or more packages by the grip (38), the suction grasping being for grasping the one or more packages by suction with the grip (38), and the back face grasping being for grasping a back face of the one or more packages by the grip (38),
move the arm (36) and the grip (38) based on the determination, and
take out the one or more packages from the placement portion (12) by moving the arm (36) and the grip (38) while at least one of the one or more packages is grasped by the grip (38) .

2. The conveyance apparatus (22) according to claim 1, wherein the processor (32) is configured to determine any one or a plurality of an upper face, a front face and the back face of the one or more packages to be grasped by the grip (38) based on the image information (42a) photographed by the camera (34) and the information in the database (42).

3. The conveyance apparatus (22) according to claim 2, wherein the processor (32) is configured to determine whether to grasp the front face or the upper face and the front face of the one or more packages after determining that the frictional grasping by the grip (38) is selected for the one or more packages.

4. The conveyance apparatus (22) according to claim 2, wherein the processor (32) is configured to determine whether to grasp the upper face and/or the front face of the one or more packages after determining that the suction grasping by the grip (38) is selected for the one or more packages.

5. The conveyance apparatus (22) according to any one of claims 2 to 4, wherein the grip (38) comprises a mechanism that is configured to grasp the upper face alone, the front face alone as well as both the upper face and the front face of at least one of the one or more packages.

6. The conveyance apparatus (22) according to any one of claims 1 to 5, wherein the processor (32) is configured to determine a size of the one or more packages and availability of suction based on the image information (42a) and the information in the database (42) and is configured to determine which the grasping mode of the frictional grasping, the suction grasping and the back face grasping should be selected for the one or more packages.

7. The conveyance apparatus (22) according to any one of claims 1 to 6, further comprising:
a lower support (40) that is configured to take out the one or more packages from the placement portion (12) while supporting the one or more packages, which are moved by the grip (38), from a lower side of the one or more packages,
wherein the processor (32) is configured to move the arm (36), the grip (38) and the lower support (40) while at least one of the one or more packages is moved by the grip (38) and the one or more packages are supported by the lower support (40) from the lower side of the one or more packages by moving the arm (36), the grip (38) and the lower support (40).

8. The conveyance apparatus (22) according to claim 7, wherein the processor (32) is configured to determine a size of the one or more packages and availability of suction and determine again which one of the frictional grasping, the suction grasping and the back face grasping should be selected for the one or more packages when the processor (32) has determined that grasping of the one or more packages has failed after the one or more packages are grasped by the grip (38) while the one or more packages are supported by the lower support (40) from the lower side of the packages.

9. The conveyance apparatus (22) according to claim 7, wherein the grip comprises a back face grip (68) that is configured to support the back face of the one or more packages, puts the one or more packages on the lower support (40) while the one or more packages are taken out from the placement portion (12) in a state where the back face is supported, and has one or more claws.

10. The conveyance apparatus (22) according to claim 9, wherein the back face grip (68) has a plurality of rods that are provided at a tip portion of the grip (38) and is configured to independently move the one or more claws with respect to the back face of the one or more packages.

11. The conveyance apparatus (22) according to claim 9, wherein the processor (32) is configured to determine, based on the image information (42a), that the one or more packages are in close contact with each other, and
the processor (32) is configured to determine a gap between the one or more packages by using the one or more claws through the upper face of the one or more packages to support the back face of the one or more packages when the processor (32) has determined that the one or more packages are in close contact with each other.

12. The conveyance apparatus (22) according to any one of claims 9 to 11, wherein the processor (32) is configured to operate the grip (38), shift a position of at least one of the one or more packages by the frictional grasping or the suction grasping with the grip (38), and generate a gap, into which the one or more claws are inserted, between the one or more packages when the processor (32) has determined that the back face grasping is performed for the one or more packages and the processor (32) has determined that there is no gap between the one or more packages.

13. The conveyance apparatus (22) according to any one of claims 7 to 12, wherein the lower support (40) has a plurality of lower support (40) plates that are configured to be independently driven in a forward direction heading toward the placement portion (12) and in a backward direction retracting from the placement portion (12) by a signal from the processor (32), and
each of the lower support (40) plates is configured to support the one or more packages taken out from the placement portion (12) by the grip (38).

14. The conveyance apparatus (22) according to claim 13, wherein the lower support (40) plates are configured to be independently driven in an upward direction and in a downward direction by a signal from the processor (32).

15. The conveyance apparatus (22) according to any one of claims 1 to 14, wherein, when the processor (32) has determined that the grip (38) has failed to grasp the one or more packages,
the processor (32) is configured to determine that the suction grasping is performed by the grip (38) for the one or more packages or determine that the back face grasping by the grip (38) is performed for the one or more packages when the frictional grasping has been performed for the one or more packages, and
the processor (32) is configured to determine that the back face grasping by the grip (38) is performed for the one or more packages when the suction grasping has been performed for the one or more packages.

16. The conveyance apparatus (22) according to any one of claims 1 to 15, wherein the processor (32) is configured to determine whether to, by the grip (38) for the one or more packages,
perform the frictional grasping or perform the suction grasping, or
perform the suction grasping or perform the back face grasping
according to the size of the one or more packages in a case where the upper face of the one or more packages is a flat face.

17. The conveyance apparatus (22) according to claim 16, wherein the processor (32) is configured to determine to perform the suction grasping by the grip (38) instead of the frictional grasping when the processor (32) has determined that two-face frictional grasping of the upper face and the front face cannot be performed for the one or more packages after the processor (32) has determined to perform the frictional grasping by the grip (38).

18. The conveyance apparatus (22) according to claim 16, wherein the processor (32) is configured to determine to perform the back face grasping by the grip (38) instead of the suction grasping when the processor (32) has determined that two-face suction grasping of the upper face and the front face cannot be performed for the one or more packages after the processor (32) has determined to perform the suction grasping by the grip (38).

19. A conveyance system comprising:
a camera (34) that is configured to acquire image information (42a) on one or more packages stacked on a placement portion (12);
a grip (38) that is configured to grasp at least one of the one or more packages;
an arm (36) that is configured to move the grip (38) toward the one or more packages imaged by the camera (34) and retract the grip (38) from the placement portion (12) in a state where the one or more packages are grasped by the grip (38); and
a controller including a communicator (58),
i) the controller being configured to
control the communicator (58), and
access a database (42) through the communicator (58) in which information on the one or more packages is stored, and
the controller being configured to
determine which grasping mode of frictional grasping, suction grasping and back face grasping should be selected from the image information (42a) photographed by the camera (34) and the information in the database (42), the frictional grasping being for frictionally grasping the one or more packages by the grip (38), the suction grasping being for grasping the one or more packages by suction with the grip (38), and the back face grasping being for grasping a back face of the one or more packages by the grip (38),
move the arm (36) and the grip (38) based on the determination, and
take out the one or more packages from the placement portion (12) while at least one of the one or more packages is grasped by the grip (38) by moving the arm (36) and the grip (38), or
ii) the controller being configured to
control the communicator (58), and
access a database (42) on a server through the communicator (58), and
the controller being configured to
move the arm (36) and the grip (38) based on a result determined on the server as to which grasping mode of frictional grasping, suction grasping and back face grasping should be selected from the image information (42a) photographed by the camera (34) and information in the database (42), the frictional grasping being for frictionally grasping the one or more packages by the grip (38), the suction grasping being for grasping the one or more packages by suction with the grip (38), and the back face grasping being for grasping a back face of the one or more packages by the grip (38), and
take out the one or more packages from the placement portion (12) by moving the arm (36) and the grip (38) while at least one of the one or more packages is grasped by the grip (38).

20. A conveyance method using a conveyance apparatus (22) according to claim 1 or a conveyance system according to claim 19, the method comprising:
determining which grasping mode of frictional grasping, suction grasping and back face grasping should be selected based on image information (42a) on one or more packages and information on the one or more packages stored in a database (42), the frictional grasping being for frictionally grasping the one or more packages, the suction grasping being for grasping the one or more packages by suction, and the back face grasping being for grasping a back face of the one or more packages; and
grasping the one or more packages based on the determination while the one or more packages are supported from a lower side.

21. The conveyance method according to claim 20, further comprising determining any one or a plurality of an upper face, a front face and the back face of the one or more packages should be grasped based on the image information (42a) on the one or more packages and the information in the database (42).

## Patentansprüche

1. Eine Fördervorrichtung (22), umfassend:
eine Kamera (34), die konfiguriert ist, Bildinformationen (42a) über eine oder mehrere auf einem Ablageabschnitt (12) gestapelte Packungen zu erfassen;
einen Greifer (38), der konfiguriert ist, mindestens eine der einen oder mehreren Pakete zu ergreifen;
einen Arm (36), der konfiguriert ist, den Greifer (38) zu dem einen oder den mehreren Paketen zu bewegen, die von der Kamera (34) abgebildet werden, und der konfiguriert ist, den Greifer (38) von dem Ablageabschnitt (12) in einem Zustand zurückzuziehen, in dem das eine oder die mehreren Pakete von dem Greifer (38) ergriffen werden;
eine Datenbank (42), in der Informationen über das eine oder die mehreren Pakete gespeichert sind; und
einen Prozessor (32), der konfiguriert ist:
aus den von der Kamera (34) aufgenommenen Bildinformationen (42a) und den Informationen in der Datenbank (42) zu bestimmen, welcher Greifmodus des Reibungsgreifens, des Sauggreifens und des Rückseitengreifens ausgewählt werden soll, wobei das Reibungsgreifen dazu dient, das eine oder die mehreren Pakete durch Reibung mit dem Greifer (38) zu ergreifen, das Sauggreifen dazu dient, das eine oder die mehreren Pakete durch Saugen mit dem Greifer (38) zu ergreifen, und das Rückseitengreifen dazu dient, eine Rückseite des einen oder der mehreren Pakete mit dem Greifer (38) zu ergreifen,
den Arm (36) und den Griff (38) basierend auf der Bestimmung zu bewegen, und
das eine oder die mehreren Pakete aus dem Platzierungsabschnitt (12) durch Bewegen des Arms (36) und des Griffs (38) herauszunehmen, während mindestens eines des einen oder der mehreren Pakete von dem Griff (38) ergriffen wird.

2. Die Fördervorrichtung (22) nach Anspruch 1, wobei der Prozessor (32) konfiguriert ist, eine oder eine Vielzahl von einer Oberseite, einer Vorderseite und der Rückseite des einen oder der mehreren Pakete, die von dem Greifer (38) zu ergreifen sind, auf der Grundlage der von der Kamera (34) fotografierten Bildinformationen (42a) und der Informationen in der Datenbank (42) zu bestimmen.

3. Die Fördervorrichtung (22) nach Anspruch 2, wobei der Prozessor (32) konfiguriert ist, zu bestimmen, ob die Vorderseite oder die Oberseite und die Vorderseite des einen oder der mehreren Pakete ergriffen werden sollen, nachdem bestimmt wurde, dass das Reibungsgreifen durch den Griff (38) für das eine oder die mehreren Pakete ausgewählt wurde.

4. Die Fördervorrichtung (22) nach Anspruch 2, wobei der Prozessor (32) konfiguriert ist, zu bestimmen, ob die Oberseite und/oder die Vorderseite des einen oder der mehreren Pakete ergriffen wird, nachdem bestimmt wurde, dass das Sauggreifen durch den Griff (38) für das eine oder die mehreren Pakete ausgewählt wurde.

5. Die Fördervorrichtung (22) nach einem der Ansprüche 2 bis 4, wobei der Greifer (38) einen Mechanismus umfasst, der konfiguriert ist, die Oberseite allein, die Vorderseite allein sowie sowohl die Oberseite als auch die Vorderseite von mindestens einem der einen oder mehreren Pakete zu ergreifen.

6. Die Fördervorrichtung (22) nach einem der Ansprüche 1 bis 5, wobei der Prozessor (32) konfiguriert ist, eine Größe des einen oder der mehreren Pakete und die Verfügbarkeit von Saugkraft basierend auf den Bildinformationen (42a) und den Informationen in der Datenbank (42) zu bestimmen und konfiguriert ist, zu bestimmen, welcher der Greifmodi des Reibungsgreifens, des Sauggreifens und des Rückseitengreifens für das eine oder die mehreren Pakete ausgewählt werden sollte.

7. Die Fördervorrichtung (22) nach einem der Ansprüche 1 bis 6, ferner umfassend:
eine untere Stütze (40), die konfiguriert ist, das eine oder die mehreren Pakete aus dem Platzierungsabschnitt (12) herauszunehmen, während sie das eine oder die mehreren Pakete, die durch den Greifer (38) bewegt werden, von einer unteren Seite des einen oder der mehreren Pakete stützt,
wobei der Prozessor (32) konfiguriert ist, den Arm (36), den Griff (38) und die untere Stütze (40) zu bewegen, während mindestens eines der einen oder mehreren Pakete durch den Griff (38) bewegt wird und die einen oder mehreren Pakete durch die untere Stütze (40) von der Unterseite der einen oder mehreren Pakete gestützt werden, indem der Arm (36), der Griff (38) und die untere Stütze (40) bewegt werden.

8. Die Fördervorrichtung (22) nach Anspruch 7, wobei der Prozessor (32) konfiguriert ist, eine Größe des einen oder der mehreren Pakete und die Verfügbarkeit eines Sogs zu bestimmen und erneut zu bestimmen, welches von dem Reibungsgreifen, dem Sauggreifen und dem Rückseitengreifen für das eine oder die mehreren Pakete ausgewählt werden sollte, wenn der Prozessor (32) festgestellt hat, dass das Greifen des einen oder der mehreren Pakete fehlgeschlagen ist, nachdem das eine oder die mehreren Pakete von dem Greifer (38) ergriffen wurden, während das eine oder die mehreren Pakete von der unteren Stütze (40) von der Unterseite der Pakete gestützt werden.

9. Die Fördervorrichtung (22) nach Anspruch 7, wobei der Griff einen Rückseitengriff (68) umfasst, der konfiguriert ist, die Rückseite des einen oder der mehreren Pakete zu stützen, der das eine oder die mehreren Pakete auf die untere Stütze (40) legt, während das eine oder die mehreren Pakete aus dem Platzierungsabschnitt (12) in einem Zustand herausgenommen werden, in dem die Rückseite gestützt wird, und der eine oder mehrere Krallen aufweist.

10. Die Fördervorrichtung (22) nach Anspruch 9, wobei der Rückseitengriff (68) eine Vielzahl von Stäben aufweist, die an einem Spitzenabschnitt des Griffs (38) vorgesehen sind, und so konfiguriert ist, dass er die eine oder mehreren Krallen unabhängig in Bezug auf die Rückseite des einen oder der mehreren Pakete bewegt.

11. Die Fördervorrichtung (22) nach Anspruch 9, wobei der Prozessor (32) konfiguriert ist, auf der Grundlage der Bildinformationen (42a) zu bestimmen, dass die ein oder mehreren Pakete in engem Kontakt miteinander stehen, und
der Prozessor (32) konfiguriert ist, einen Spalt zwischen dem einen oder den mehreren Paketen zu bestimmen, indem die eine oder die mehreren Krallen durch die obere Fläche des einen oder der mehreren Pakete hindurch verwendet werden, um die hintere Fläche des einen oder der mehreren Pakete zu stützen, wenn der Prozessor (32) festgestellt hat, dass die einen oder die mehreren Pakete in engem Kontakt miteinander stehen.

12. Die Fördervorrichtung (22) nach einem der Ansprüche 9 bis 11, wobei der Prozessor (32) konfiguriert ist, den Greifer (38) zu betätigen, eine Position von mindestens einem der einen oder mehreren Pakete durch das Reibungsgreifen oder das Sauggreifen mit dem Greifer (38) zu verschieben und einen Spalt zu erzeugen, eine Lücke zwischen dem einen oder den mehreren Paketen zu erzeugen, in die die eine oder die mehreren Krallen eingeführt werden, wenn der Prozessor (32) festgestellt hat, dass das Greifen der Rückseite für das eine oder die mehreren Pakete durchgeführt wird, und der Prozessor (32) festgestellt hat, dass keine Lücke zwischen dem einen oder den mehreren Paketen vorhanden ist.

13. Die Fördervorrichtung (22) nach einem der Ansprüche 7 bis 12, wobei die untere Halterung (40) eine Vielzahl von unteren Halterungsplatten (40) aufweist, die konfiguriert sind, durch ein Signal von dem Prozessor (32) unabhängig in einer Vorwärtsrichtung in Richtung auf den Platzierungsabschnitt (12) und in einer Rückwärtsrichtung zurückziehend von dem Platzierungsabschnitt (12) angetrieben zu werden, und
jede der unteren Stützplatten (40) konfiguriert ist, das eine oder die mehreren Pakete zu stützen, die von dem Platzierungsabschnitt (12) durch den Greifer (38) herausgenommen werden.

14. Die Fördervorrichtung (22) nach Anspruch 13, wobei die unteren Stützplatten (40) konfiguriert sind, unabhängig in einer Aufwärtsrichtung und in einer Abwärtsrichtung durch ein Signal von dem Prozessor (32) angetrieben zu werden.

15. Die Fördervorrichtung (22) nach einem der Ansprüche 1 bis 14, wobei, wenn der Prozessor (32) festgestellt hat, dass der Greifer (38) das eine oder die mehreren Pakete nicht ergriffen hat,
der Prozessor (32) konfiguriert ist, zu bestimmen, dass das Sauggreifen durch den Greifer (38) für das eine oder die mehreren Pakete durchgeführt wird, oder zu bestimmen, dass das Rückseitengreifen durch den Greifer (38) für das eine oder die mehreren Pakete durchgeführt wird, wenn das Reibungsgreifen für das eine oder die mehreren Pakete durchgeführt wurde, und
der Prozessor (32) konfiguriert ist, zu bestimmen, dass das Greifen der Rückseite durch den Greifer (38) für das eine oder die mehreren Pakete durchgeführt wird, wenn das Greifen durch Saugen für das eine oder die mehreren Pakete durchgeführt worden ist.

16. Die Fördervorrichtung (22) nach einem der Ansprüche 1 bis 15, wobei der Prozessor (32) konfiguriert ist, zu bestimmen, ob durch den Greifer (38) für das eine oder die mehreren Pakete
das Greifen durch Reibung oder das Greifen durch Saugen durchzuführen ist, oder
das Greifen durch Saugen oder das Greifen mit der Rückseite durchzuführen ist
entsprechend der Größe des einen oder der mehreren Pakete in einem Fall, in dem die obere Fläche des einen oder der mehreren Pakete eine flache Fläche ist.

17. Die Fördervorrichtung (22) nach Anspruch 16, wobei der Prozessor (32) konfiguriert ist, zu bestimmen, dass das Sauggreifen durch den Greifer (38) anstelle des Reibungsgreifens durchgeführt wird, wenn der Prozessor (32) bestimmt wurde, dass das zweiseitige Reibungsgreifen der oberen Fläche und der vorderen Fläche für das eine oder die mehreren Pakete nicht durchgeführt werden kann, nachdem der Prozessor (32) bestimmt wurde, das Reibungsgreifen durch den Greifer (38) durchzuführen.

18. Die Fördervorrichtung (22) nach Anspruch 16, wobei der Prozessor (32) konfiguriert ist, zu bestimmen, dass das Greifen der Rückseite durch den Griff (38) anstelle des Sauggreifens durchgeführt wird, wenn der Prozessor (32) bestimmt hat, dass das zweiseitige Sauggreifen der Oberseite und der Vorderseite für das eine oder die mehreren Pakete nicht durchgeführt werden kann, nachdem der Prozessor (32) bestimmt hat, das Sauggreifen durch den Griff (38) durchzuführen.

19. Ein Fördersystem, umfassend:
eine Kamera (34), die konfiguriert ist, Bildinformationen (42a) über ein oder mehrere Pakete zu erfassen, die auf einem Ablageabschnitt (12) gestapelt sind;
einen Greifer (38), der konfiguriert ist, mindestens eines der ein oder mehreren Pakete zu ergreifen;
einen Arm (36), der konfiguriert ist, den Greifer (38) zu dem einen oder den mehreren Paketen hin zu bewegen, die von der Kamera (34) abgebildet werden, und den Greifer (38) von dem Ablageabschnitt (12) in einem Zustand zurückzuziehen, in dem das eine oder die mehreren Pakete von dem Greifer (38) ergriffen werden; und
eine Steuerung, die einen Kommunikator (58) enthält,
i.) wobei die Steuerung konfiguriert ist
den Kommunikator (58) zu steuern, und
auf eine Datenbank (42) über den Kommunikator (58) zuzugreifen, in der Informationen über das eine oder die mehreren Pakete gespeichert sind, und
wobei die Steuerung konfiguriert ist
zu bestimmen, welcher Greifmodus des Reibungsgreifens, des Sauggreifens und des Rückseitengreifens aus den von der Kamera (34) aufgenommenen Bildinformationen (42a) und den Informationen in der Datenbank (42) ausgewählt werden sollte, das Reibungsgreifen zum Reibungsgreifen des einen oder der mehreren Pakete durch den Greifer (38) dient, das Sauggreifen zum Greifen des einen oder der mehreren Pakete durch Saugen mit dem Greifer (38) dient, und das Rückseitengreifen zum Greifen einer Rückseite des einen oder der mehreren Pakete durch den Greifer (38) dient,
den Arm (36) und den Griff (38) basierend auf der Bestimmung zu bewegen, und
das eine oder die mehreren Pakete durch Bewegen des Arms (36) und des Griffs (38) aus dem Platzierungsabschnitt (12) herauszunehmen, während mindestens eines des einen oder der mehreren Pakete von dem Griff (38) ergriffen wird, oder
ii.) die Steuerung konfiguriert ist
den Kommunikator (58) zu steuern, und
auf eine Datenbank (42) auf einem Server über den Kommunikator (58) zuzugreifen, und
die Steuerung konfiguriert ist
den Arm (36) und den Griff (38) auf der Grundlage eines auf dem Server ermittelten Ergebnisses zu bewegen, welcher Greifmodus aus Reibungsgreifen, Sauggreifen und Rückseitengreifen aus den von der Kamera (34) aufgenommenen Bildinformationen (42a) und Informationen in der Datenbank (42) ausgewählt werden sollte, das Reibungsgreifen zum Reibungsgreifen des einen oder der mehreren Pakete durch den Griff (38) dient, das Sauggreifen zum Greifen des einen oder der mehreren Pakete durch Saugen mit dem Griff (38) dient, und das Rückseitengreifen zum Greifen einer Rückseite des einen oder der mehreren Pakete durch den Griff (38) dient, und
das Entnehmen des einen oder der mehreren Pakete aus dem Platzierungsabschnitt (12) durch Bewegen des Arms (36) und des Griffs (38), während mindestens eines des einen oder der mehreren Pakete von dem Griff (38) ergriffen wird.

20. Ein Förderverfahren unter Verwendung einer Fördervorrichtung (22) nach Anspruch 1 oder eines Fördersystems nach Anspruch 19, wobei das Verfahren umfasst:
Bestimmen, welcher Greifmodus des Reibungsgreifens, des Sauggreifens und des Rückseitengreifens ausgewählt werden sollte, basierend auf Bildinformationen (42a) über ein oder mehrere Pakete und Informationen über das eine oder die mehreren Pakete, die in einer Datenbank (42) gespeichert sind, wobei das Reibungsgreifen zum Reibungsgreifen des einen oder der mehreren Pakete dient, das Sauggreifen zum Ergreifen des einen oder der mehreren Pakete durch Saugen dient und das Rückseitengreifen zum Ergreifen einer Rückseite des einen oder der mehreren Pakete dient; und
Ergreifen des einen oder der mehreren Pakete basierend auf der Bestimmung, während das eine oder die mehreren Pakete von einer unteren Seite getragen werden.

21. Förderverfahren nach Anspruch 20, ferner umfassend das Bestimmen einer oder einer Vielzahl von einer Oberseite, einer Vorderseite und der Rückseite des einen oder der mehreren Pakete, die auf der Grundlage der Bildinformationen (42a) auf dem einen oder den mehreren Paketen und der Informationen in der Datenbank (42) ergriffen werden sollten.

## Revendications

1. Appareil de transport (22) comprenant :
un appareil photo (34) qui est configuré pour acquérir des informations d'image (42a) sur un ou plusieurs colis empilés sur une partie de placement (12) ;
une pince (38) qui est configurée pour saisir au moins un des un ou plusieurs colis ;
un bras (36) qui est configuré pour déplacer la pince (38) vers les un ou plusieurs colis imagés par l'appareil photo (34) et est configuré pour rétracter la pince (38) depuis la partie de placement (12) dans un état où les un ou plusieurs colis sont saisis par la pince (38) ;
une base de données (42) dans laquelle des informations sur les un ou plusieurs colis sont stockées ; et
un processeur (32) qui est configuré pour :
déterminer le mode de saisie parmi une saisie par frottement, une saisie par aspiration et une saisie par une face arrière qui devrait être sélectionné à partir des informations d'image (42a) photographiées par l'appareil photo (34) et des informations dans la base de données (42), la saisie par frottement servant à la saisie par frottement des un ou plusieurs colis par la pince (38), la saisie par aspiration servant à la saisie des un ou plusieurs colis par aspiration avec la pince (38), et la saisie par une face arrière servant à la saisie d'une face arrière des un ou plusieurs colis par la pince (38),
déplacer le bras (36) et la pince (38) sur la base de la détermination, et
retirer les un ou plusieurs colis de la partie de placement (12) en déplaçant le bras (36) et la pince (38) tandis qu'au moins un des un ou plusieurs colis est saisi par la pince (38).

2. Appareil de transport (22) selon la revendication 1, dans lequel le processeur (32) est configuré pour déterminer l'une quelconque ou une pluralité d'une face supérieure, une face avant et la face arrière des un ou plusieurs colis devant être saisies par la pince (38) sur la base des informations d'image (42a) photographiées par l'appareil photo (34) et des informations dans la base de données (42).

3. Appareil de transport (22) selon la revendication 2, dans lequel le processeur (32) est configuré pour déterminer s'il faut saisir la face avant ou la face supérieure et la face avant des un ou plusieurs colis après avoir déterminé que la saisie par frottement par la pince (38) est sélectionnée pour les un ou plusieurs colis.

4. Appareil de transport (22) selon la revendication 2, dans lequel le processeur (32) est configuré pour déterminer s'il faut saisir la face supérieure et/ou la face avant des un ou plusieurs colis après avoir déterminé que la saisie par aspiration par la pince (38) est sélectionnée pour les un ou plusieurs colis.

5. Appareil de transport (22) selon l'une quelconque des revendications 2 à 4, dans lequel la pince (38) comprend un mécanisme qui est configuré pour saisir la face supérieure seule, la face avant seule ainsi qu'à la fois la face supérieure et la face avant d'au moins un des un ou plusieurs colis.

6. Appareil de transport (22) selon l'une quelconque des revendications 1 à 5, dans lequel le processeur (32) est configuré pour déterminer une taille des un ou plusieurs colis et la disponibilité de l'aspiration sur la base des informations d'image (42a) et des informations dans la base de données (42) et est configuré pour déterminer le mode de saisie parmi la saisie par frottement, la saisie par aspiration et la saisie par une face arrière qui devrait être sélectionné pour les un ou plusieurs colis.

7. Appareil de transport (22) selon l'une quelconque des revendications 1 à 6, comprenant en outre :
un support inférieur (40) qui est configuré pour retirer les un ou plusieurs colis de la partie de placement (12) tout en supportant les un ou plusieurs colis, qui sont déplacés par la pince (38), à partir d'un côté inférieur des un ou plusieurs colis,
dans lequel le processeur (32) est configuré pour déplacer le bras (36), la pince (38) et le support inférieur (40) tandis qu'au moins un des un ou plusieurs colis est déplacé par la pince (38) et les un ou plusieurs colis sont supportés par le support inférieur (40) à partir du côté inférieur des un ou plusieurs colis en déplaçant le bras (36), la pince (38) et le support inférieur (40).

8. Appareil de transport (22) selon la revendication 7,
dans lequel le processeur (32) est configuré pour déterminer une taille des un ou plusieurs colis et la disponibilité de l'aspiration et déterminer à nouveau laquelle parmi la saisie par frottement, la saisie par aspiration et la saisie par une face arrière devrait être sélectionnée pour les un ou plusieurs colis lorsque le processeur (32) a déterminé que la saisie des un ou plusieurs colis a échoué après que les un ou plusieurs colis ont été saisis par la pince (38) tandis que les un ou plusieurs colis sont supportés par le support inférieur (40) à partir du côté inférieur des colis.

9. Appareil de transport (22) selon la revendication 7,
dans lequel la pince comprend une pince de face arrière (68) qui est configurée pour supporter la face arrière des un ou plusieurs colis, met les un ou plusieurs colis sur le support inférieur (40) tandis que les un ou plusieurs colis sont retirés de la partie de placement (12) dans un état où la face arrière est supportée, et présente une ou plusieurs griffes.

10. Appareil de transport (22) selon la revendication 9,
dans lequel la pince de face arrière (68) présente une pluralité de tiges qui sont fournies à une partie d'extrémité de la pince (38) et est configurée pour déplacer indépendamment les une ou plusieurs griffes par rapport à la face arrière des un ou plusieurs colis.

11. Appareil de transport (22) selon la revendication 9, dans lequel le processeur (32) est configuré pour déterminer, sur la base des informations d'image (42a), que les un ou plusieurs colis sont en contact étroit les uns avec les autres, et
le processeur (32) est configuré pour déterminer un espace entre les un ou plusieurs colis en utilisant les une ou plusieurs griffes à travers la face supérieure des un ou plusieurs colis pour supporter la face arrière des un ou plusieurs colis lorsque le processeur (32) a déterminé que les un ou plusieurs colis sont en contact étroit les uns avec les autres.

12. Appareil de transport (22) selon l'une quelconque des revendications 9 à 11, dans lequel le processeur (32) est configuré pour faire fonctionner la pince (38), décaler une position d'au moins un des un ou plusieurs colis par la saisie par frottement ou la saisie par aspiration avec la pince (38), et générer un espace, dans lequel les une ou plusieurs griffes sont insérées, entre les un ou plusieurs colis lorsque le processeur (32) a déterminé que la saisie par une face arrière est réalisée pour les un ou plusieurs colis et le processeur (32) a déterminé qu'il n'y a aucun espace entre les un ou plusieurs colis.

13. Appareil de transport (22) selon l'une quelconque des revendications 7 à 12, dans lequel le support inférieur (40) présente une pluralité de plaques du support inférieur (40) qui sont configurées pour être entraînées indépendamment dans une direction vers l'avant allant vers la partie de placement (12) et dans une direction vers l'arrière se rétractant depuis la partie de placement (12) par un signal provenant du processeur (32), et
chacune des plaques du support inférieur (40) est configurée pour supporter les un ou plusieurs colis retirés de la partie de placement (12) par la pince (38).

14. Appareil de transport (22) selon la revendication 13, dans lequel les plaques du support inférieur (40) sont configurées pour être entraînées indépendamment dans une direction vers le haut et dans une direction vers le bas par un signal provenant du processeur (32).

15. Appareil de transport (22) selon l'une quelconque des revendications 1 à 14, dans lequel, lorsque le processeur (32) a déterminé que la pince (38) a échoué à saisir les un ou plusieurs colis,
le processeur (32) est configuré pour déterminer que la saisie par aspiration est réalisée par la pince (38) pour les un ou plusieurs colis ou déterminer que la saisie par une face arrière par la pince (38) est réalisée pour les un ou plusieurs colis lorsque la saisie par frottement a été réalisée pour les un ou plusieurs colis, et
le processeur (32) est configuré pour déterminer que la saisie par une face arrière par la pince (38) est réalisée pour les un ou plusieurs colis lorsque la saisie par aspiration a été réalisée pour les un ou plusieurs colis.

16. Appareil de transport (22) selon l'une quelconque des revendications 1 à 15, dans lequel le processeur (32) est configuré pour déterminer s'il faut, par la pince (38) pour les un ou plusieurs colis,
réaliser la saisie par frottement ou réaliser la saisie par aspiration, ou
réaliser la saisie par aspiration ou réaliser la saisie par une face arrière
conformément à la taille des un ou plusieurs colis dans un cas où la face supérieure des un ou plusieurs colis est une face plate.

17. Appareil de transport (22) selon la revendication 16, dans lequel le processeur (32) est configuré pour déterminer de réaliser la saisie par aspiration par la pince (38) au lieu de la saisie par frottement lorsque le processeur (32) a déterminé qu'une saisie par frottement par deux faces de la face supérieure et la face avant ne peut pas être réalisée pour les un ou plusieurs colis après que le processeur (32) a déterminé pour réaliser la saisie par frottement par la pince (38).

18. Appareil de transport (22) selon la revendication 16, dans lequel le processeur (32) est configuré pour déterminer de réaliser la saisie par une face arrière par la pince (38) au lieu de la saisie par aspiration lorsque le processeur (32) a déterminé qu'une saisie par aspiration par deux faces de la face supérieure et la face avant ne peut pas être réalisée pour les un ou plusieurs colis après que le processeur (32) a déterminé pour réaliser la saisie par aspiration par la pince (38).

19. Système de transport comprenant :
un appareil photo (34) qui est configuré pour acquérir des informations d'image (42a) sur un ou plusieurs colis empilés sur une partie de placement (12) ;
une pince (38) qui est configurée pour saisir au moins un des un ou plusieurs colis ;
un bras (36) qui est configuré pour déplacer la pince (38) vers les un ou plusieurs colis imagés par l'appareil photo (34) et rétracter la pince (38) depuis la partie de placement (12) dans un état où les un ou plusieurs colis sont saisis par la pince (38) ; et
un dispositif de commande incluant un appareil de communication (58),
i.) le dispositif de commande étant configuré pour commander l'appareil de communication (58), et
accéder à une base de données (42) par le biais du dispositif de communication (58) dans laquelle des informations sur les un ou plusieurs colis sont stockées, et
le dispositif de commande étant configuré pour
déterminer le mode de saisie parmi une saisie par frottement, une saisie par aspiration et une saisie par une face arrière qui devrait être sélectionné à partir des informations d'image (42a) photographiées par l'appareil photo (34) et des informations dans la base de données (42), la saisie par frottement servant à la saisie par frottement des un ou plusieurs colis par la pince (38), la saisie par aspiration servant à la saisie des un ou plusieurs colis par aspiration avec la pince (38), et la saisie par une face arrière servant à la saisie d'une face arrière des un ou plusieurs colis par la pince (38),
déplacer le bras (36) et la pince (38) sur la base de la détermination, et
retirer les un ou plusieurs colis de la partie de placement (12) tandis qu'au moins un des un ou plusieurs colis est saisi par la pince (38) en déplaçant le bras (36) et la pince (38), ou
ii.) le dispositif de commande étant configuré pour commander l'appareil de communication (58), et
accéder à une base de données (42) sur un serveur par le biais de l'appareil de communication (58), et
le dispositif de commande étant configuré pour
déplacer le bras (36) et la pince (38) sur la base d'un résultat déterminé sur le serveur quant au mode de saisie parmi une saisie par frottement, une saisie par aspiration et une saisie par une face arrière qui devrait être sélectionné à partir des informations d'image (42a) photographiées par l'appareil photo (34) et d'informations dans la base de données (42), la saisie par frottement servant à la saisie par frottement des un ou plusieurs colis par la pince (38), la saisie par aspiration servant à la saisie des un ou plusieurs colis par aspiration avec la pince (38), et la saisie par une face arrière servant à la saisie d'une face arrière des un ou plusieurs colis par la pince (38), et
retirer les un ou plusieurs colis de la partie de placement (12) en déplaçant le bras (36) et la pince (38) tandis qu'au moins un des un ou plusieurs colis est saisi par la pince (38).

20. Procédé de transport utilisant un appareil de transport (22) selon la revendication 1 ou un système de transport selon la revendication 19, le procédé comprenant :
le fait de déterminer le mode de saisie parmi une saisie par frottement, une saisie par aspiration et une saisie par une face arrière qui devrait être sélectionné sur la base d'informations d'image (42a) sur un ou plusieurs colis et d'informations sur les un ou plusieurs colis stockées dans une base de données (42), la saisie par frottement servant à la saisie par frottement des un ou plusieurs colis, la saisie par aspiration servant à la saisie des un ou plusieurs colis par aspiration, et la saisie par une face arrière servant à la saisie d'une face arrière des un ou plusieurs colis ; et
une saisie des un ou plusieurs colis sur la base de la détermination tandis que les un ou plusieurs colis sont supportés à partir d'un côté inférieur.

21. Procédé de transport selon la revendication 20, comprenant en outre le fait de déterminer que l'une quelconque ou une pluralité d'une face supérieure, une face avant et la face arrière des un ou plusieurs colis devraient être saisies sur la base des informations d'image (42a) sur les un ou plusieurs colis et des informations dans la base de données (42).
